(19) Europäisches Patentamt

European Patent Office

Office européen des brevets

(11) **EP 4 283 484 A1**

(12) # EUROPEAN PATENT APPLICATION
published in accordance with Art. 153(4) EPC

(43) Date of publication:
**29.11.2023 Bulletin 2023/48**

(21) Application number: **21920728.9**

(22) Date of filing: **24.11.2021**

(51) International Patent Classification (IPC):
**G06F 16/23** (2019.01)

(52) Cooperative Patent Classification (CPC):
**G06F 16/23; G06F 16/29**

(86) International application number:
**PCT/CN2021/132759**

(87) International publication number:
**WO 2022/156352 (28.07.2022 Gazette 2022/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.01.2021 CN 202110097462**

(71) Applicant: **Huawei Technologies Co., Ltd.
Shenzhen, Guangdong 518129 (CN)**

(72) Inventor: **LIU, Jianqin
Shenzhen, Guangdong 518129 (CN)**

(74) Representative: **Huawei European IPR
Huawei Technologies Duesseldorf GmbH
Riesstraße 25
80992 München (DE)**

(54) **METHOD AND APPARATUS FOR UPDATING MAP, AND COMPUTER-READABLE STORAGE
MEDIUM**

(57)    A map update method and apparatus, and a computer-readable storage medium are provided, to improve accuracy of an updated map. The map update apparatus receives data of a first data type and data of a second data type from a plurality of data collection devices, obtains first information of a map element from the data of the first data type, and obtains second information of the map element from the data of the second data type; and determines object information of the map element on a map based on the first information and the second information of the map element. Compared with data of one data type, data of two different data types may include more information. Therefore, the data of the two data types can be used to obtain more accurate information about the map element, which can improve the accuracy of the updated map.

FIG. 1

## Description

## CROSS-REFERENCE TO RELATED APPLICATIONS

This application claims priority to Chinese Patent Application No. 202110097462.X, filed with the China National Intellectual Property Administration on January 25, 2021 and entitled "MAP UPDATE METHOD AND APPARATUS, AND COMPUTER-READABLE STORAGE MEDIUM", which is incorporated herein by reference in its entirety.

## TECHNICAL FIELD

This application relates to the field of intelligent transportation technologies, and in particular, to a map update method and apparatus, and a computer-readable storage medium.

## BACKGROUND

A high definition map (High Definition Map, HD Map) is a map with high positioning precision and real-time data update. The high definition map mainly serves autonomous vehicles, and provides lane level planning in road sections and vehicle positioning assistance for the autonomous vehicles.

In a solution, a professional map collection vehicle collects data, and the map is updated based on the data collected by the professional map collection vehicle. However, costs of the professional map collection vehicle are high, and a quantity of professional map collection vehicles is small. A collected data volume cannot meet a requirement of an autonomous vehicle for an hour-level or even minute-level data update degree of a map.

With continuous development of intelligentization in the entire vehicle industry, more vehicles are installed with various sensors, and a vehicle end may transmit data collected by the sensors to a cloud server by using a network. In addition to vehicles, more devices have a data collection function, such as a road side unit (road side unit, RSU). The cloud server may make and update a high definition map based on data collected by a plurality of data collection devices (for example, a plurality of vehicles), and release an updated high definition map to the vehicles. In the future, this way of making and updating a high definition map will become a mainstream manner, and how to improve accuracy of a made or updated high definition map becomes a problem that needs to be urgently resolved.

## SUMMARY

This application provides a map update method and apparatus, and a storage medium, to determine information about a map element with reference to data of a plurality of data types, thereby improving map accuracy.

According to a first aspect, this application provides a map update method, where the method includes: A map update apparatus may receive data of a first data type and data of a second data type from a plurality of data collection devices; obtain first information of a map element from the data of the first data type; obtain second information of the map element from the data of the second data type; and determine object information of the map element on a map based on the first information and the second information, where the object information includes at least one of location information, content information, or attribute information of the map element. In a possible implementation, the first data type and the second data type are two data types of raw data, feature level data, or object level data. The raw data is data collected by a sensor. The feature level data is data that is extracted from the raw data collected by the sensor and that can represent a feature of a detected object. The object level data is data that is extracted from the raw data or the feature level data and that can represent an attribute of the detected object.

It can be learned that, in this embodiment of this application, because the object information may be determined by comprehensively considering data of a plurality of data types, accuracy of the object information can be improved. For example, because the feature level data is obtained by filtering the raw data, some key information may be filtered out. If the object information of the map elements is determined by combining the raw data and the feature level data, the accuracy of the object information of the map element can be further improved. For another example, because the object level data is obtained by filtering much information from the raw data, compared with the raw data and the feature level data, some key information may be filtered out. Therefore, the object level data and the feature level data, or the object level data and the raw data are considered together to determine the object information of the map element, to further improve the accuracy of the object information of the map element.

In a possible implementation, the plurality of data collection devices include a first data collection device and a second data collection device, and that the map update apparatus may obtain first information of a map element from the data of the first data type includes: obtaining third information of the map element from first data obtained by the first data collection device, where the first data is the data of the first data type; obtaining fourth information of the map element from second data obtained by the second data collection device, where the second data is the data of the first data type; and obtaining the first information of the map element based on the third information and the fourth information. In this way, the first information can be obtained based on a plurality of pieces of data of the first data type, thereby improving accuracy of the first information.

In a possible implementation, that the map update apparatus may obtain the first information of the map element based on the third information and the fourth information includes: determining the first information based on at least one of reliability of the first data or reliability of the second data, and the third information and the fourth information. In this way, reliability of the first information can be further improved.

In a possible implementation, that the map update apparatus may determine the first information based on at least one of reliability of the first data or reliability of the second data, and the third information and the fourth information includes: determining a first weight based on the at least one of the reliability of the first data or the reliability of the second data, where the first weight is used to represent a degree of impact of the third information on the first information. A second weight is determined based on the at least one of the reliability of the first data or the reliability of the second data, where the second weight is used to represent a degree of impact of the fourth information on the first information. The first information is determined based on the first weight, the second weight, the third information, and the fourth information. Because weighted fusion is performed on the information about the map element based on the reliability of the data, reliability of the first information can be further improved.

In a possible implementation, the reliability of the first data is related to at least one of the following: a historical map element identification accuracy rate of the first data collection device; or confidence of the first data. In this way, when considering the historical map element identification accuracy rate of the first data collection device, hardware accuracy of the first data collection device may be considered, that is, the reliability of the first data may be deduced based on historical performance. Therefore, accuracy of the reliability can be further improved. In addition, when reliability of data is determined by using confidence of the data, the accuracy of the reliability can be further improved.

In a possible implementation, the reliability of the second data is related to at least one of the following: a historical map element identification accuracy rate of the second data collection device; or confidence of the second data. In this way, the reliability of the first data can be further improved. In this way, when considering the historical map element identification accuracy rate of the second data collection device, hardware accuracy of the second data collection device may be considered, that is, the reliability of the second data may be deduced based on historical performance. Therefore, accuracy of the reliability can be further improved. In addition, when reliability of data is determined by using confidence of the data, the accuracy of the reliability can be further improved.

In a possible implementation, the confidence of the first data is related to at least one of the parameter of the sensing apparatus that collects the first data, or a relative location relationship between the sensing apparatus that collects the first data and the map element. In this way, the confidence of the first data can reflect reliability of the first data more accurately.

In a possible implementation, the confidence of the second data is related to at least one of the parameter of the sensing apparatus that collects the second data, or a relative location relationship between the sensing apparatus that collects the second data and the map element. In this way, the confidence of the second data can reflect reliability of the second data more accurately.

In a possible implementation, the historical map element identification accuracy rate of the first data collection device includes at least one of the following: a proportion of data with map element information being correctly identified within a preset time period in data reported by the first data collection device; a proportion of data with map element information being correctly identified within a preset time period in data that is of the first data type and that is reported by the first data collection device; or a proportion of data with map element information being correctly identified within a preset time period in data that is reported by the first data collection device and that includes a map element of a same type as the map element. It can be learned that the historical map element identification accuracy rate of the data collection device can be maintained at different granularities, so that a capability of the data collection device can be evaluated more accurately.

In a possible implementation, the historical map element identification accuracy rate of the second data collection device is used to indicate at least one of the following: a proportion of data with map element information being correctly identified within a preset time period in data reported by the second data collection device; a proportion of data with map element information being correctly identified within a preset time period in data that is of the first data type and that is reported by the second data collection device; or a proportion of data with map element information being correctly identified within a preset time period in data that is reported by the second data collection device and that includes a map element of a same type as the map element. It can be learned that the historical map element identification accuracy rate of the data collection device can be maintained at different granularities, so that a capability of the data collection device can be evaluated more accurately.

In a possible implementation, the obtaining second information of the map element from the data of the second data type includes: obtaining sixth information of the map element from third data obtained by a third data collection device, where the third data is data of the second data type; obtaining seventh information of the map element from

fourth data obtained by a fourth data collection device, where the fourth data is data of the second data type; and obtaining the second information of the map element based on the sixth information and the seventh information. In this way, the second information can be obtained based on a plurality of pieces of data of the second data type, thereby improving accuracy of the second information.

In a possible implementation, the obtaining the second information of the map element based on the sixth information and the seventh information includes: determining the second information based on at least one of the reliability of the third data or the reliability of the fourth data, the sixth information, and the seventh information. In this way, reliability of the second information can be further improved.

In a possible implementation, that the map update apparatus may determine the second information based on at least one of the reliability of the third data or the reliability of the fourth data, the sixth information, and the seventh information includes: determining a fifth weight based on the at least one of the reliability of the third data or the reliability of the fourth data, where the fifth weight is used to represent a degree of impact of the sixth information on the second information. A sixth weight is determined based on the at least one of the reliability of the third data or the reliability of the fourth data, where the sixth weight is used to represent a degree of impact of the seventh information on the second information. The second information is determined based on the fifth weight, the sixth weight, the sixth information, and the seventh information. Because weighted fusion is performed on the information about the map element based on the reliability of the data, reliability of the second information can be further improved.

In a possible implementation, the reliability of the third data is related to at least one of the following: a historical map element identification accuracy rate of the third data collection device; or confidence of the third data. In this way, when considering the historical map element identification accuracy rate of the third data collection device, hardware accuracy of the third data collection device may be considered, that is, the reliability of the third data may be deduced based on historical performance. Therefore, accuracy of the reliability can be further improved. In addition, when reliability of data is determined by using confidence of the data, the accuracy of the reliability can be further improved.

In a possible implementation, the reliability of the fourth data is related to at least one of the following: a historical map element identification accuracy rate of the fourth data collection device; or confidence of the fourth data. In this way, when considering the historical map element identification accuracy rate of the fourth data collection device, hardware accuracy of the fourth data collection device may be considered, that is, the reliability of the fourth data may be deduced based on historical performance. Therefore, accuracy of the reliability can be further improved. In addition, when reliability of data is determined by using confidence of the data, the accuracy of the reliability can be further improved.

In a possible implementation, the confidence of the third data is related to at least one of the parameter of the sensing apparatus that collects the third data, or a relative location relationship between the sensing apparatus that collects the third data and the map element. In this way, the confidence of the third data can reflect reliability of the third data more accurately.

In a possible implementation, the confidence of the fourth data is related to at least one of the parameter of the sensing apparatus that collects the fourth data, or a relative location relationship between the sensing apparatus that collects the fourth data and the map element. In this way, the confidence of the fourth data can reflect reliability of the fourth data more accurately.

In a possible implementation, the map update apparatus may send the object information to the third data collection device, where the object information is used to enable the third data collection device to determine a historical map element identification accuracy rate of the third data collection device with reference to the sixth information. In this way, vertical fusion may be further performed based on the historical map element identification accuracy rate of the data collection device, and accuracy of vertical fusion may be further improved.

In a possible implementation, the map update apparatus may send the object information to the fourth data collection device, where the object information is used to enable the fourth data collection device to determine a historical map element identification accuracy rate of the fourth data collection device with reference to the seventh information. In this way, vertical fusion may be further performed based on the historical map element identification accuracy rate of the data collection device, and accuracy of vertical fusion may be further improved.

In a possible implementation, the map update apparatus may update, based on data received from the plurality of data collection devices and the object information, a historical map element identification accuracy rate of at least one data collection device in the plurality of data collection devices, where the at least one data collection device may be a device that provides the data of the first data type. The at least one data collection device may also be a device that provides the data of the first data type. For example, in a possible implementation, the map update apparatus may determine the historical map element identification accuracy rate of the third data collection device based on the object information and the sixth information; and send the historical map element identification accuracy rate of the third data collection device to the third data collection device. In this way, vertical fusion may be further performed based on the historical map element identification accuracy rate of the data collection device, and accuracy of vertical fusion may be further improved.

In a possible implementation, the map update apparatus may determine the historical map element identification accuracy rate of the fourth data collection device based on the object information and the seventh information; and send the historical map element identification accuracy rate of the fourth data collection device to the fourth data collection device. In this way, vertical fusion may be further performed based on the historical map element identification accuracy rate of the data collection device, and accuracy of vertical fusion may be further improved.

In a possible implementation, for at least one of the plurality of data collection devices, the historical map element identification accuracy rate of the at least one data collection device includes at least one of the following:

a detection success rate of the at least one data collection device within a preset time period (for example, a higher detection success rate indicates a higher historical map element identification accuracy rate);

a quantity of times that the at least one data collection device makes effective contributions to cloud fusion within a preset time period (for example, a larger quantity of times that the at least one data collection device makes effective contributions to the cloud fusion indicates a higher historical map element identification accuracy rate);

a star level of reliability of the at least one data collection device within a preset time period, for example, there is a maximum of 5 stars, and a star level of the first data collection device is 3 (for example, a higher star level of the reliability indicates a higher historical map element identification accuracy rate);

a quantity of times that a detection fault occurs in the at least one data collection device within a preset time period (for example, a smaller quantity of times that a detection fault occurs indicates a higher historical map element identification accuracy rate);

a detection error of the at least one data collection device within a preset time period (for example, a smaller detection error indicates a higher historical map element identification accuracy rate); and

a star level of detection result precision of the at least one data collection device within a preset time period. For example, a higher star level of detection result precision indicates a higher historical map element identification accuracy rate.

It can be learned from the foregoing solution that there may be various specific representation forms of the historical map element identification accuracy rate of the data collection device, so that flexibility of the solution can be improved.

In a possible implementation, the historical map element identification accuracy rate of the at least one data collection device is a historical map element identification accuracy rate for a specific data type. For example, a method for calculating the historical map element identification accuracy rate of the third data collection device may be: a proportion of data with map element information being correctly identified within a preset time period in data that is of the specific data type and that is reported by the third data collection device. In this application, the data type may also be written as level. In this case, the data type may also be written as a historical map element identification accuracy rate for a level. In this way, a data accuracy advantage of each data collection device in a specific data type may be used to finally improve accuracy of fused map information obtained from a plurality of data collection devices.

In a possible implementation, the historical map element identification accuracy rate of the at least one data collection device is a historical map element identification accuracy rate for a specific map element type. For example, a method for calculating the historical map element identification accuracy rate of the third data collection device may be: a proportion of data with map element information being correctly identified within a preset time period in data that includes the specific map element type and that is reported by the third data collection device. In this way, a data accuracy advantage of each data collection device in a specific map element type may be used to finally improve accuracy of fused map information obtained from a plurality of data collection devices.

In a possible implementation, the historical map element identification accuracy rate of the at least one data collection device is a historical map element identification accuracy rate for a specific data collection environment. For example, a method for calculating the historical map element identification accuracy rate of the third data collection device may be: a proportion of data with map element information being correctly identified within a preset time period in data that includes the specific data collection environment and that is reported by the third data collection device. In this way, a data accuracy advantage of each data collection device in a specific data collection environment may be used to finally improve accuracy of fused map information obtained from a plurality of data collection devices.

In a possible implementation, the map update apparatus may indicate a data reporting policy to the at least one data collection device, and the data reporting policy is determined based on the historical map element identification accuracy rate. In a possible implementation, the data reporting policy indicated to the at least one data collection device includes at least one of the following: a reporting period of the at least one data collection device; or information about a map element type reported by the at least one data collection device.

In a possible implementation, the map update apparatus may indicate, to the at least one data collection device, a reporting period of data of the specific data type based on the historical map element identification accuracy rate for the specific data type of the at least one data collection device. In this way, an information reporting policy can be formulated more properly based on performance of the data collection device.

In a possible implementation, the map update apparatus may indicate, to the at least one data collection device, a reporting period of data of a map element of the specific map element type based on the historical map element identification accuracy rate for the specific map element type of the at least one data collection device. In this way, an information reporting policy can be formulated more properly based on performance of the data collection device.

In a possible implementation, the map update apparatus may indicate, to the at least one data collection device, a reporting period of data in the specific data collection environment based on the historical map element identification accuracy rate for the specific data collection environment of the at least one data collection device. In this way, an information reporting policy can be formulated more properly based on performance of the data collection device.

In a possible implementation, that the map update apparatus may determine object information of the map element on a map based on the first information and the second information of the map element includes: determining the object information based on at least one of first parameter information or second parameter information, and the first information and the second information. The first parameter information is used to indicate reliability of data in the data of the first data type, and the second parameter information is used to indicate reliability of data in the data of the second data type. In this way, accuracy of the object information can be further improved.

In a possible implementation, that the map update apparatus may determine the object information based on at least one of first parameter information or second parameter information, and the first information and the second information includes: determining a third weight based on at least one of the first parameter information or the second parameter information, where the third weight is used to represent a degree of impact of the first information on the object information; determining a fourth weight based on at least one of the first parameter information or the second parameter information, where the fourth weight is used to represent a degree of impact of the second information on the object information; and determining the object information based on the third weight, the fourth weight, the first information, and the second information. Because weighted fusion is performed on the first information and the second information, and the weighted fusion is performed based on parameter information used to represent a data reliability, accuracy of the object information can be further improved.

In a possible implementation, the map update apparatus may determine, based on the first parameter information and the second parameter information, information with a higher reliability in the first information and the second information as the object information. Because the object information is determined based on information with a highest reliability, accuracy of the object information can be improved, and then accuracy of an updated map can be improved.

In a possible implementation, the first parameter information includes at least one of the following: a preset priority level of the first data type; a quantity of information that is in the first information and the second information and that matches the first information; a data volume of the data of the first data type; confidence of the data of the first data type; or a historical map element identification accuracy rate of a data collection device corresponding to the data of the first data type.

In a possible implementation, the second parameter information includes at least one of the following: a preset priority level of the second data type; a quantity of information that is in the first information and the second information and that matches the second information; a data volume of the data of the second data type; confidence of the data of the second data type; or a historical map element identification accuracy rate of a data collection device corresponding to the data of the second data type.

In a possible implementation, content included in the first parameter information is sequentially determined based on priorities of the following parameter items: a parameter item with a highest priority is the preset priority level of the first data type; a parameter item with a second highest priority is a quantity of pieces of information that match the first information and that are in the information about the map element used to determine the object information; and a parameter item with a third highest priority is a data volume in the data of the first data type. In this way, a priority is set for each parameter item, so that accuracy of horizontal fusion can be further improved.

In a possible implementation, content included in the second parameter information is sequentially determined based on priorities of the following parameter items: a parameter item with a highest priority is a preset priority level of the second data type; a parameter item with a second highest priority is a quantity of pieces of information that match the second information and that are in the information about the map element used to determine the object information; and a parameter item with a third highest priority is a data volume in the data of the second data type. In this way, a priority is set for each parameter item, so that accuracy of horizontal fusion can be further improved.

In a possible implementation, the confidence of the data of the first data type is related to at least one of the following: the parameter of the sensing apparatus of the data collection device corresponding to the data of the first data type; or a relative location relationship between the data collection device corresponding to the data of the first data type and the map element. In this way, the confidence can reflect reliability of the data more accurately.

In a possible implementation, the confidence of the data of the second data type is related to at least one of the following: the parameter of the sensing apparatus of the data collection device corresponding to the data of the second data type; or a relative location relationship between the data collection device corresponding to the data of the second data type and the map element. In this way, the confidence can reflect reliability of the data more accurately.

Corresponding to the method provided in the first aspect, this application further provides an apparatus. The apparatus may be a map update apparatus, a device on a server side, or a chip. For example, the map update apparatus may be used as the map update apparatus on the server side or a communications chip that may be used on the map update apparatus of the server side.

According to a second aspect, a map update apparatus is provided, including a communications unit and a processing unit, to perform any implementation of the first aspect. The communications unit is configured to perform functions related to sending and receiving. Optionally, the communications unit includes a receiving unit and a sending unit. In a design, the map update apparatus is a communications chip, and the communications unit may be an input/output circuit or a port of the communications chip.

In another design, the communications unit may be a transmitter and a receiver, or the communications unit may be a transmitter machine and a receiver machine.

Optionally, the map update apparatus further includes modules that may be configured to perform any implementation of the first aspect.

According to a third aspect, a map update apparatus is provided. The map update apparatus is a map update apparatus on the foregoing server side. The map update apparatus includes a processor and a memory. Optionally, the map update apparatus further includes a transceiver. The memory is configured to store a computer program or an instruction. The processor is configured to invoke the computer program or the instruction from the memory and run the computer program or the instruction. When the processor executes the computer program or the instruction in the memory, the map update apparatus is enabled to perform any implementation in the first aspect.

Optionally, there are one or more processors, and there are one or more memories.

Optionally, the memory may be integrated with the processor, or the memory and the processor are separately disposed.

Optionally, the transceiver may include a transmitter machine (transmitter) and a receiver machine (receiver).

According to a fourth aspect, a map update apparatus is provided, including a processor. The processor is coupled to a memory, and may be configured to perform the method in any possible implementation of the first aspect. Optionally, the map update apparatus further includes a memory. Optionally, the map update apparatus further includes a communications interface coupled to the processor.

In another implementation, the map update apparatus is a map update apparatus on a server side. When the map update apparatus is the map update apparatus on the server side, the communications interface may be a transceiver or an input/output interface. Optionally, the transceiver may be a transceiver circuit. Optionally, the input/output interface may be an input/output circuit.

In still another implementation, the map update apparatus is a chip or a chip system. When the map update apparatus is the chip or the chip system, the communications interface may be an input/output interface, an interface circuit, an output circuit, an input circuit, a pin, a related circuit, or the like on the chip or in the chip system. The processor may alternatively be embodied as a processing circuit or a logic circuit.

According to a fifth aspect, a system is provided. The system includes the foregoing data collection device and a map update apparatus on a server side.

According to a sixth aspect, a vehicle is provided, including the foregoing data collection device.

According to a seventh aspect, a computer program product is provided. The computer program product includes a computer program (which may also be referred to as code or an instruction). When the computer program is run, a map update apparatus is enabled to perform the method in any possible implementation of the first aspect.

According to an eighth aspect, a computer-readable storage medium is provided. The computer-readable storage medium stores a computer program (which may also be referred to as code or an instruction), and when the computer program runs on a processor, a map update apparatus is enabled to perform the method according to any possible implementation of the first aspect.

According to a ninth aspect, a chip system is provided. The chip system may include a processor. The processor is coupled to a memory, and may be configured to perform the method in any possible implementation of the first aspect. Optionally, the chip system further includes a memory. The memory is configured to store a computer program (which may also be referred to as code or an instruction). The processor is configured to invoke a computer program from the memory and run the computer program, so that a device on which a chip system is installed performs the method according to any possible implementation of the first aspect.

In a specific implementation process, the map update apparatus may be a chip. The input circuit may be an input pin. The output circuit may be an output pin. The processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in this embodiment of this application.

BRIEF DESCRIPTION OF DRAWINGS

FIG. 1 is a schematic diagram of a scenario to which an embodiment of this application is applicable;

FIG. 2 is a schematic flowchart of a map update method according to an embodiment of this application;

FIG. 3 is a schematic flowchart of a map update method according to an embodiment of this application;

FIG. 4 is a schematic diagram of a structure of a communications apparatus according to an embodiment of this application;

FIG. 5 is a schematic diagram of a structure of another communications apparatus according to an embodiment of this application; and

FIG. 6 is a schematic diagram of a structure of still another communications apparatus according to an embodiment of this application.

**DESCRIPTION OF EMBODIMENTS**

The following further describes embodiments of this application with reference to the accompanying drawings.

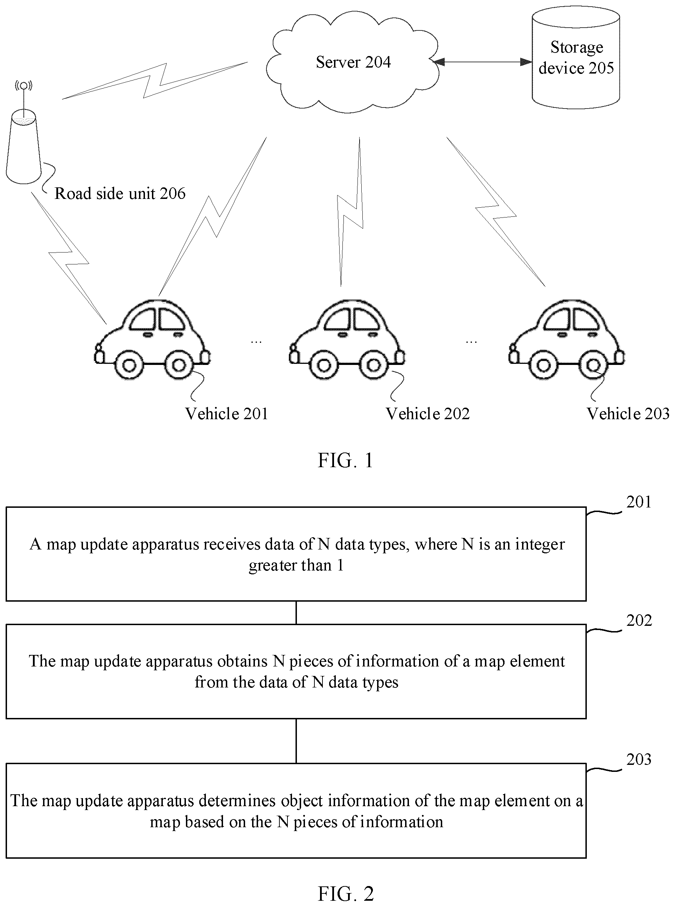

FIG. 1 is an example of a schematic diagram of a scenario to which an embodiment of this application is applicable. As shown in FIG. 1, there may be one or more data collection devices in the scenario, and the data collection device may be configured to collect data by using a sensor. The data collection device may be a terminal device. In FIG. 1, an example in which the terminal device is a vehicle is used for illustration. FIG. 1 shows three vehicles: a vehicle 201, a vehicle 202, and a vehicle 203. The data collection device may also be a road side unit 206. In an application scenario of this embodiment of this application, there may also be a server 204, a storage device 205, and the like. The server may be used to: determine information about a map element based on data collected by each data collection device, and then update a map based on the information about the map element. The storage device 205 may be used to store the map. The following describes components involved in FIG. 1 and some terms involved in the embodiments of this application.

(1) Terminal device.

The terminal device in the embodiments of this application may be a vehicle or a non-motor vehicle having a communications function, a portable device, a wearable device, a mobile phone (or referred to as a "cellular" phone), or the like, or may be a component, a chip, or the like in these devices. The terminal device in this application may be a terminal device applied to the Internet of Vehicles, and the terminal device in this application may also be referred to as an Internet of Vehicles terminal device, an Internet of Vehicles terminal, an Internet of Vehicles communications apparatus, an in-vehicle terminal device, or the like.

A vehicle (for example, any one of the vehicle 201, the vehicle 202, or the vehicle 203) is a typical terminal device in the Internet of Vehicles. In the following embodiments of this application, a vehicle is used as an example for description. Any vehicle in the embodiments of this application may be an intelligent vehicle or a non-intelligent vehicle. This is not limited in the embodiments of this application. A person skilled in the art should understand that, in this application, an embodiment in which a vehicle is used as an example may be further applied to another type of terminal device. The terminal device may specifically perform a service procedure related to the Internet of Vehicles by using an internal function unit or apparatus of the terminal device. For example, when the terminal device is a vehicle, one or more of the following apparatuses in the vehicle may be configured to perform a method procedure related to the terminal device in the embodiments of this application, such as a telematics box (telematics box, T-Box), a domain controller (domain controller, DC), a multi-domain controller (multi-domain controller, MDC), an on board unit (on board unit, OBU), or an Internet of vehicles chip.

In the embodiments of this application, the vehicle may communicate with another object based on a vehicle to everything (vehicle to everything (V2X)) wireless communications technology. For example, communication between a vehicle and a cloud server may be implemented based on V2X. The vehicle may communicate with the another object based on wireless fidelity (wireless fidelity (Wi-Fi)), a fifth generation (5th generation, 5G) mobile communications technology, or the like. For example, communication between the vehicle and another apparatus (for example, the road side unit 206 or the server 204) may be implemented based on 5G.

In the embodiments of this application, the terminal device may be configured to collect surrounding environment information, for example, may collect surrounding environment information by using a sensor disposed on the terminal device. In the embodiments of this application, the vehicle may include the data collection device. The data collection device may collect data by using a sensor, and transmit raw data collected by using the sensor to the server or the road side unit, so that the server or the road side unit performs a map update operation. The data collection device may also process the raw data to obtain processed data (such as feature level data and object level data), and transmit the processed data to the server or the road side unit, so that the server or the road side unit performs a map update operation. When the terminal device is a vehicle, the data collection device in the vehicle in the embodiments of this application may be a component in the vehicle, the vehicle itself, a mobile phone, or the like. The data collection device may be a data collection device of a positioning system in the vehicle, a data collection device for intelligent driving, or any other device with computing capabilities.

In the embodiments of this application, a sensor is disposed on the terminal device (for example, a vehicle). The sensor is configured to collect an image near the vehicle. The sensor may be a camera, a laser radar, a millimeter-wave radar, an ultrasonic wave, or the like. In addition, one or more types of sensors may be disposed on each vehicle, and there may be one or more sensors of each type. The sensor may be installed on a top of the vehicle (for example, the sensor may be disposed in the middle of the top of the vehicle), a front end of the vehicle, or the like. In the embodiments of this application, a location and a quantity of sensors installed in each vehicle are not limited.

(2) Road side unit (road side unit, RSU) 206.

As shown in FIG. 1, the application scenario may include the RSU 206. The RSU 206 may be configured to send a vehicle to everything (vehicle to everything, V2X) message to the terminal device in a communications mode such as direct communication (such as PC5) or dedicated short range communications (dedicated short range communications, DSRC). The V2X message may carry dynamic information or other information that needs to be notified to the terminal device. A communications mode between the road side unit and the terminal device may also be referred to as vehicle to infrastructure (vehicle to infrastructure, V2I) communication. It should be noted that FIG. 1 shows only communications paths between the road side unit 206 and the vehicle 201 and between the road side unit 206 and the server 204. In actual application, the road side unit 206 may also have a communications path with another vehicle, for example, the vehicle 202 or the vehicle 203, which is not shown in the figure.

A specific deployment form of the road side unit is not specifically limited in this application. The road side unit may be a terminal device, a mobile or non-mobile terminal device, a server, a chip, or the like. The road side unit may be further configured to report dynamic information that occurs within a jurisdiction to an Internet of vehicles server, for example, report the dynamic information by using a roadside information (roadside information, RSI) message.

A system architecture to which the embodiments of this application are applicable may include the road side unit, or may not include the road side unit. This is not limited in the embodiments of this application. In a possible implementation, the road side unit may perform focused sensing on some specified elements according to an instruction delivered by the server, and report a sensing result. Alternatively, in another possible implementation, the road side unit may send an instruction to the terminal device or deliver an updated map.

A data collection device may also be disposed in the road side unit in the embodiments of this application. The data collection device may collect data by using a sensor, and transmit raw data collected by using the sensor to the server or the road side unit, so that the server or the road side unit performs a map update operation. The data collection device may also process the raw data to obtain processed data (such as feature level data and object level data), and transmit the processed data to the server or the road side unit, so that the server or the road side unit performs a map update operation.

(3) Server 204.

As shown in FIG. 1, the application scenario may include the server 204. The server 204 may be an Internet of Vehicles platform or a server that manages the terminal device and/or the road side unit and provides a service, and includes an application server or a map cloud server that provides a service for a high definition map and a navigation map. In a possible implementation, the server 204 may be configured to perform functions such as updating a map based on data reported by the data collection device, and updating and delivering a high definition map. A specific deployment form of the server is not limited in this application. Specifically, the server may be deployed on a cloud, or may be an independent computer device, a chip, or the like. When the V2X message needs to be sent to the terminal device, the server may send the V2X message to the road side unit, and the road side unit broadcasts the V2X message to a terminal device in a coverage area of the road side unit. Certainly, the server may directly send the V2X message to the terminal device.

(4) Storage device 205.

As shown in FIG. 1, there may be the storage device 205 in this application scenario, and the storage device 205 may be configured to store data, for example, may be configured to store a map.

(5) Data types include raw data, feature level data, and object level data.

In the embodiments of this application, a sensor is disposed on a data collection device (for example, a vehicle). The sensor is configured to collect an image near the vehicle. The sensor may be a camera, a laser radar, a millimeter-wave radar, an ultrasonic wave, or the like. In addition, one or more types of sensors may be disposed on each vehicle, and there may be one or more sensors of each type. The sensor may be installed on a top of the vehicle (for example, the sensor may be disposed in the middle of the top of the vehicle), a front end of the vehicle, or the like. In the embodiments of this application, a location and a quantity of sensors installed in each vehicle are not limited.

In the embodiments of this application, three types of data are defined: raw data, feature level (Feature Level) data, and object level data. In the embodiments of this application, the raw data collected by the sensor is processed to obtain at least one of the feature level data or the object level data. The following describes the three types of data.

It should be noted that the three data types mentioned in the embodiments of this application are merely examples, and data types applicable to the embodiments of this application are not limited to the three types.

The raw data (Raw Data) is data collected by the sensor. For example, when the sensor is a laser radar, the raw data is laser radar point cloud data; or when the sensor is a camera, the raw data is pixel level (Pixel Level) data. The raw data may be expressed as Pi (i=0, 1, 2, ..., N), where Pi is information about a point in an environment detected by the sensor, and N represents a quantity of environment points detected by the sensor. For example, as for a three-dimensional laser radar point cloud, Pi represents three-dimensional coordinate information of a point in an environment, and as for a camera, Pi represents pixel information of a point in an environment that is mapped to a two-dimensional image.

The feature level (Detection Level or Feature Level) data is data that is extracted from the raw data collected by the sensor and that can represent a feature of a detected object. The feature, for example, may be a key point of a shape and contour of a detected object, or may be a local gradient feature obtained by using a three-dimensional laser point cloud or image in an environment. The feature level data may be expressed as Fi (i=0, 1, 2, ..., N), where Fi may be information about a feature of the detected object in the environment detected by the sensor, and N represents a quantity of features of the detected object.

The object level (Object Level) data is data that is extracted from the raw data or the feature level data and that can represent an attribute of the detected object. The object level data has a significant semantic feature, such as lane lines, traffic lights, and traffic signs. The object level data may be expressed as Oi (i=0, 1, 2, ..., N), where Oi is information about an object in the environment detected by the sensor, and N is a quantity of objects detected by the sensor.

In the embodiments of this application, conversion between data types may be implemented through feature extraction and object extraction. For example, feature extraction may be performed on the raw data to obtain the feature level data, object extraction may be performed on the raw data to obtain the object level data, and object extraction may be performed on the feature level data to obtain the object level data. This embodiment is not limited to a feature extraction method and an object extraction method.

(6) Map element.

In the embodiments of this application, the map element refers to some elements in the map, and includes but is not limited to a road, a lane line, a sign, a ground identifier, a signal light, a drivable space sign line, and the like. The road may include a guardrail, a road edge, and the like. There are various types of signs such as a road sign, an indicative sign, and a height-limited sign. The ground identifier includes a traffic diversion identifier, an entrance/exit identifier, a speed limit identifier, a time limit identifier, and the like. In a possible implementation, the embodiments of this application may be applicable to a high definition map. Generally, the high definition map is an electronic map with higher precision and more data dimensions, and has more map elements. The higher precision, for example, is reflected in a fact that element information included in the map is accurate to centimeters.

Based on the foregoing content, FIG. 2 is an example of a schematic flowchart of a map update method according to an embodiment of this application. The method may be performed by a map update apparatus and a data collection device. The map update apparatus may be located on a server side, for example, may be a device on the server side, or may be a module on a server, or may be a chip on a server. The data collection device mentioned in this embodiment of this application may be located at a vehicle end, for example, may be a vehicle, a module of a vehicle, or a chip on a vehicle. The data collection device may also be located at an RSU end, for example, may be an RSU, or may be a module on an RSU, or may be a chip on an RSU. As shown in FIG. 2, the method includes the following steps.

Step 201: One or more data collection devices report data. The map update apparatus receives data of N data types from a plurality of data collection devices, where N is an integer greater than 1.

In a possible implementation, the N data types are a plurality of data types in raw data, feature level data, or object level data. It should be noted that the three data types mentioned in the embodiments of this application are merely examples, and data types applicable to the embodiments of this application are not limited to the three types. For description of the three data types, refer to the foregoing content. Details are not described herein again.

Step 202: The map update apparatus obtains N pieces of information of a map element from the data of N data types. The N pieces of information are in a one-to-one correspondence with the N data types.

Step 203: The map update apparatus determines object information of the map element on a map based on the N pieces of information. The object information includes at least one of location information, content information, or attribute information of the map element.

For example, when the map element is a lane line, the object information may be at least one of location information of the lane line, a color of the lane line, or a specific shape (a solid line, a dashed line, or the like) of the lane line.

For another example, when the map element is a sign, for example, a road sign, an indicative sign, or a height-limited sign, the object information may be at least one of location information of the sign, content of the sign, a shape of the sign, or a color of the sign.

For still another example, when the map element is a ground identifier, for example, a traffic diversion identifier, an entrance/exit identifier, a speed limit identifier, or a time limit identifier, the object information may be at least one of location information of the ground identifier, a specific shape of the ground identifier, or a color of the ground identifier.

For yet another example, when the map element is a signal light, the object information may be at least one of location information of the signal light or a specific shape of the signal light.

For still yet another example, when the map element is a drivable space sign line, the object information may be at least one of location information of the drivable space sign line or specific content of the drivable space sign line.

For a further example, when the map element is an obstacle (for example, the obstacle is a traffic road cone), the object information may be at least one of location information of the obstacle or shape information of the obstacle.

When N is 2, a possible implementation of FIG. 2 includes: obtaining first information of the map element from data of a first data type; obtaining second information of the map element from data of a second data type; and determining the object information of the map element on the map based on the first information and the second information. When N is 3, a possible implementation of FIG. 2 includes: obtaining the first information of the map element from the data of the first data type; obtaining the second information of the map element from the data of the second data type; obtaining fifth information of the map element from at least one piece of data of a third data type; and determining the object information of the map element on the map based on the first information, the second information, and the fifth information. To describe this embodiment of this application more clearly in subsequent content, an example in which the first data type is the object level data, the second data type is the feature level data, and the third data type is the raw data is used for description.

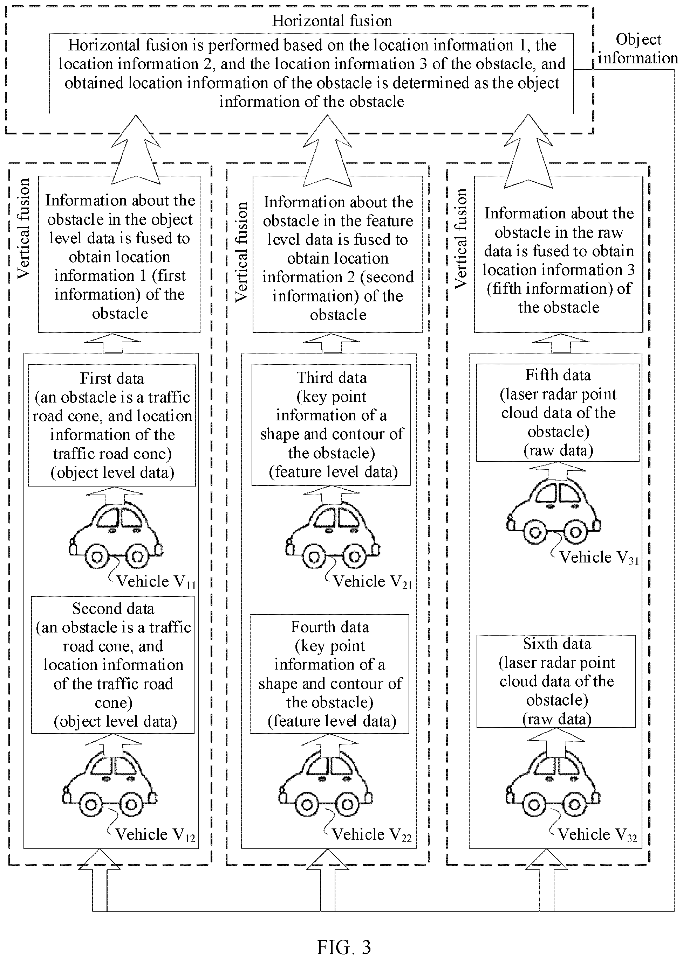

To describe the solution shown in FIG. 2 more clearly, FIG. 3 shows an example of a schematic diagram of another possible scenario to which an embodiment of this application is applicable. The following describes a map update method provided in an embodiment of this application with reference to FIG. 3.

As shown in FIG. 3, an example in which a data collection device is a vehicle is used for illustration, namely, a vehicle $V_{11}$, a vehicle $V_{12}$, a vehicle $V_{21}$, a vehicle $V_{22}$, a vehicle $V_{31}$, and a vehicle $V_{32}$ shown in FIG. 3. To clearly describe this embodiment of this application, the following content is described by using an example in which a map element is an obstacle (for example, the obstacle may be a traffic road cone). Information about the map element may be at least one of location information of the obstacle or a shape of the obstacle. The following content is described by using an example in which the information about the map element is the location information of the obstacle.

In this embodiment of this application, there may be one or more types of data reported by any vehicle, for example, may be one or more of raw data, feature level data, or object level data. A type of data that can be reported by a vehicle is not limited in this embodiment of this application. FIG. 3 is merely an example. As shown in FIG. 3, a data type of data reported by the vehicle $V_{11}$ (a first data collection device) and a vehicle $V_{12}$ (a second data collection device) is the object level data (a first data type). For example, data reported by at least one of the vehicle $V_{11}$ or the vehicle $V_{12}$ may include that the obstacle is the traffic road cone, and include location information of the traffic road cone.

As shown in FIG. 3, a data type of data reported by the vehicle $V_{21}$ (a third data collection device) or the vehicle $V_{22}$ (a fourth data collection device) is the feature level data (a second data type). For example, data reported by at least one of the vehicle $V_{21}$ or the vehicle $V_{22}$ may include key point information of a shape and contour of the obstacle.

As shown in FIG. 3, a data type of data reported by the vehicle $V_{31}$ (a fifth data collection device) and the vehicle $V_{32}$ (a sixth data collection device) is the raw data (a third data type). For example, data reported by at least one of the vehicle $V_{31}$ or the vehicle $V_{32}$ may include: laser radar point cloud data of the obstacle.

In this embodiment of this application, after receiving the data, a server 204 in the cloud may first perform vertical fusion on the data of various data types. The vertical fusion mentioned in this embodiment of this application refers to fusion of data of a same data type. For example, a map update apparatus performs fusion on object level data (first data) reported by the vehicle $V_{11}$ and object level data (second data) reported by the vehicle $V_{12}$, to obtain location information (first information of the map element) of an obstacle corresponding to fused object level data. In a possible implementation, one piece of location information (third information) of the obstacle may be obtained from the object level data reported by the vehicle $V_{11}$, another piece of location information (fourth information) of the obstacle may be obtained from the object level data reported by the vehicle $V_{12}$, and fusion is performed based on two pieces of location information of the obstacle, to obtain the location information (the first information of the map element) of the obstacle corresponding to the fused object level data.

For example, the map update apparatus performs fusion on feature level data (third data) reported by the vehicle $V_{21}$ and feature level data (fourth data) reported by the vehicle $V_{22}$, to obtain location information (second information of the map element) of an obstacle corresponding to fused feature level data. In a possible implementation, one piece of location information (sixth information) of the obstacle may be obtained from the feature level data reported by the vehicle $V_{21}$, another piece of location information (seventh information) of the obstacle may be obtained from the feature level data reported by the vehicle $V_{22}$, and fusion is performed based on two pieces of location information of the obstacle, to obtain the location information (the second information of the map element) of the obstacle corresponding to the fused feature level data.

For example, the map update apparatus performs fusion on raw data (fifth data) reported by the vehicle $V_{31}$ and raw data (sixth data) reported by the vehicle $V_{32}$, to obtain location information (fifth information of the map element) of an obstacle corresponding to fused raw data. In a possible implementation, one piece of location information (eighth information) of the obstacle may be obtained from the raw data reported by the vehicle $V_{31}$, another piece of location information (ninth information) of the obstacle may be obtained from the raw data reported by the vehicle $V_{32}$, and fusion is performed based on two pieces of location information of the obstacle, to obtain the location information (the fifth information of the map element) of the obstacle corresponding to the fused raw data.

Further, obtained pieces of information of map elements corresponding to various data types are fused, and the fusion may be understood as horizontal fusion, to obtain object information of the map element. The object information of the map element is information about the map element on an updated map. For example, the location information of the obstacle corresponding to the fused object level data (the first information of the map element), the location information of the obstacle corresponding to the fused feature level data (the second information of the map element), and the location information of the obstacle corresponding to the fused raw data (the fifth information of the map element) are fused to finally obtain the location information of the obstacle, namely, the object information of the map element.

For example, the location information of the obstacle corresponding to the fused object level data is location information 1, the location information of the obstacle corresponding to the fused feature level data is location information 2, and the location information of the obstacle corresponding to the fused raw data is location information 3. For example, considering that the feature level data may be obtained by filtering the raw data, and some key information may be filtered out, while the object level data may be obtained by filtering out more information, a possible sorting manner of priorities of data types is as follows: a priority of the raw data is the highest, a priority of the feature level data is the second highest, and a priority of the object level data is the lowest. Based on this, after the horizontal fusion is performed, it may be determined that the location information (the object information of the map element) of the obstacle is the location information 3.

Further, in this embodiment of this application, a map update apparatus on a server side may further update a historical map element identification accuracy rate of at least one of a plurality of data collection devices based on data received from the plurality of data collection devices and the object information. The at least one data collection device may be a device that provides data of the first data type. The at least one data collection device may also be a device that provides data of the second data type. For example, the map update apparatus on the server side may calculate or update a historical map element identification accuracy rate of a data collection device on a vehicle end based on the object information, to send the historical map element identification accuracy rate of the data collection device to the data collection device. In another possible implementation, the map update apparatus on the server side may further send the object information to data collection devices at all vehicle ends, so that the data collection devices maintain historical map element identification accuracy rates thereof respectively. The following will describe the historical map element identification accuracy rate in detail, and no explanation is given herein.

It can be learned from the foregoing content that horizontal and vertical closed-loop fusion can be implemented in this embodiment of this application. To be specific, vertical fusion is performed on data of a same type based on data reported by all data collection devices, to obtain fused data corresponding to all data types. Further, horizontal fusion is performed on the fused data corresponding to all the data types, and a final result is used as the object information of the map element, to update the map. Further, the obtained object information of the map element is fed back to all the data collection devices, so that all the data collection devices maintain historical map element identification accuracy rates thereof respectively.

It can be learned from the foregoing content that, in this embodiment of this application, because the object information may be determined by comprehensively considering data of a plurality of data types, accuracy of the object information can be improved. For example, because the feature level data is obtained by filtering the raw data, some key information may be filtered out. If the object information of the map elements is determined by combining the raw data and the feature level data, the accuracy of the object information of the map element can be further improved. For another example, because the object level data is obtained by filtering much information from the raw data, compared with the raw data and the feature level data, some key information may be filtered out. Therefore, the object level data and the feature level data, or the object level data and the raw data are considered together to determine the object information of the map element, to further improve the accuracy of the object information of the map element.

For the vertical fusion, in a possible implementation, a plurality of pieces of data may be fused based on reliability corresponding to each of the plurality of pieces of data. For example, the first information may be determined based on at least one of reliability of the first data or reliability of the second data, and the third information and the fourth information. Data with a higher reliability indicates greater impact of information about a map element in the data on the first information.

In a possible implementation, information about a map element corresponding to data with a highest reliability may be used as the first information. For example, the object level data (the first data) reported by the vehicle $V_{11}$ has a higher reliability, the location information of the obstacle determined based on the first data is location information 4, while the location information of the obstacle determined based on the object level data (the second data) reported by the vehicle $V_{12}$ is location information 5. In this case, it may be determined that the location information 4 is used as first information of the obstacle.

In another possible implementation, when there are a large quantity of data collection apparatuses, more than two pieces of data of a same data type may be obtained for a same map element, and information about a map element supported by a larger quantity of data collection apparatuses may be used as information about a map element that is in a vertical fusion result and that is corresponding to the data type. For example, there are three vehicles, data types reported by the three vehicles are all object level data, and location information that is of the obstacle and that is determined based on data reported by the three vehicles is location information 6, location information 7, and location information 7. In this case, because the location information 7 accounts for a large proportion of a total quantity, it may be determined that in a result of performing vertical fusion on the object level data, the location information of the obstacle is the location information 7.

In still another possible implementation, a first weight is determined based on the at least one of the reliability of the first data or the reliability of the second data, where the first weight is used to represent a degree of impact of the third information on the first information. A second weight is determined based on the at least one of the reliability of the first data or the reliability of the second data, where the second weight is used to represent a degree of impact of the fourth information on the first information. The first information is determined based on the first weight, the second weight, the third information, and the fourth information.

In this embodiment of this application, an example in which pieces of object level data (for example, the first data and the second data in FIG. 3) are fused is used for description.

In a possible implementation, data fusion may be performed on the first data and the second data by using a formula (1):

$$y=f(\text{result}_1, \text{result}_2)=\frac{w1}{w1+w2}\text{result}_1 + \frac{w2}{w1+w2}\text{result}_2 \quad \text{Formula (1)}$$

In Formula (1):

y is a data fusion result;
$\text{result}_1$ is the first data;
$\text{result}_2$ is the second data;
w1 is the reliability corresponding to the first data, and may be specifically determined based on a parameter of a first sensing apparatus that obtains the first data, where w1 may be one-dimensional data, or may be multi-dimensional data, for example, $w1=(w1_1, w1_2, ..., w1_i, ..., w1_{M1})$, M1 is a quantity of objects included in the first data, $w1_i$ is reliability corresponding to an object i in the first data, and i is a natural number less than M1;
w2 is the reliability corresponding to the second data, and may be specifically determined based on a parameter of a second sensing apparatus that obtains the second data, where w2 may be one-dimensional data, or may be multi-dimensional data, for example, $w2=(w2_1, w2_2, ..., w2_j, ..., w2_{M2})$, M2 is a quantity of objects included in the second data, $w2_j$ is reliability corresponding to an object j in the second data, and j is a natural number less than M2;

$$\frac{w1}{w1+w2}$$

may be understood as the first weight; and

$$\frac{w1}{w1+w2}$$

may be understood as the second weight.

In another possible implementation, the result$_1$ may be understood as the third information of the map element determined from the first data, the result$_2$ is the fourth information of the map element determined from the first data, and y is the first information obtained from fused data after the first data and the second data are fused.

It may be understood that reliability of one piece of data may be divided into finer reliability, so that different map elements in the data are respectively corresponding to different reliability. It is not difficult to understand that a larger proportion of the reliability of the first data in a sum of reliability of the first data and the second data indicates a larger proportion of the first data in a fusion result. It may also be understood as, if a value of reliability of a sensing apparatus is larger, sensing data obtained by the sensing apparatus through detection accounts for a larger proportion in a fusion result.

In the foregoing content, an example in which pieces of object level data are fused is used for description, and a solution for fusing the raw data and the feature level data is similar. For example, the second information may also be determined based on at least one of the reliability of the third data or the reliability of the fourth data, the sixth information, and the seventh information. A fifth weight is determined based on the at least one of the reliability of the third data or the reliability of the fourth data, where the fifth weight is used to represent a degree of impact of the sixth information on the second information. A sixth weight is determined based on the at least one of the reliability of the third data or the reliability of the fourth data, where the sixth weight is used to represent a degree of impact of the seventh information on the second information. The second information is determined based on the fifth weight, the sixth weight, the sixth information, and the seventh information. A manner of determining the second information is similar to that of determining the first information, and details are not described herein again.

Based on the foregoing content, it can be learned that, in a vertical fusion process, vertical fusion may be performed based on reliability corresponding to data collected by the data collection device. In a possible implementation, reliability of data collected by a data collection device may include at least one of confidence of the data or a historical map element identification accuracy rate of the data collection device. The following describes these parameter items by using a parameter item a1 and a parameter item a2.

Parameter item a1: confidence corresponding to the first data.

In a possible implementation, the confidence of the first data is related to at least one of the parameter of the sensing apparatus that collects the first data, or a relative location relationship between the sensing apparatus that collects the first data and the map element.

The confidence may be determined based on one or more of the parameter of the sensing apparatus that collects the first data, a sensing distance of the map element, and a sensing angle of the map element.

The parameter of the sensing apparatus is related to initial precision, an installation space angle, and installation coordinates of the sensing apparatus.

The sensing distance of the map element is a distance between the map element and the sensing apparatus in a sensing coordinate system.

The sensing angle of the map element is an angle formed by the map element and the sensing apparatus in the sensing coordinate system.

It should be noted that, when the sensing apparatus includes a plurality of sensors, confidence of the sensing apparatus may be obtained in a manner of weighting or averaging confidence of the plurality of sensors included in the sensing apparatus.

It is not difficult to understand that higher precision of the parameter of the sensing apparatus indicates a larger confidence value, and lower precision of the parameter of the sensing apparatus indicates a smaller confidence value. A smaller sensing distance indicates a larger confidence value, and a larger sensing distance indicates a smaller confidence value. A smaller sensing angle indicates a larger confidence value, and a larger sensing angle indicates a smaller confidence value.

Confidence (confidence) can be used to measure reliability of an identification result. Currently, there are a plurality of confidence calculation methods in the industry, including at least the following several methods:
a posterior probability directly obtained based on a Bayesian classification method, an estimation for a posterior probability obtained based on a neural network or another method, a randomness measurement value obtained based on a randomness theory of an algorithm, a membership value obtained based on fuzzy mathematics, an accuracy rate obtained through statistics of several test experiments, and the like.

It should be noted that the confidence calculation method in this embodiment of this application is not limited to the foregoing several types. Any calculation method that can be used to determine the confidence may be applied to this embodiment of this application, and falls within the protection scope of this embodiment of this application.

Parameter item a2: the historical map element identification accuracy rate of the first data collection device.

In this embodiment of this application, the historical map element identification accuracy rate of the first data collection device may be maintained based on historical data. Specifically, one or more of a parameter item a2-1, a parameter item a2-2, and a parameter item a2-3 may be included.

Parameter item a2-1: a proportion of data with map element information being correctly identified within a preset time period in data reported by the first data collection device.

In this embodiment of this application, the proportion of data with map element information being correctly identified may also be understood as: a map element information identification accuracy rate.

For example, in a preset time period, the first data collection device reports information about K0 map elements, where information about K1 map elements meets a first preset condition. If meeting the first preset condition, information about the map element may be referred to as belonging to data that is detected to be correct. In this case, a ratio of K1 to K0 may be used as the historical map element identification accuracy rate of the first data collection device. K0 is a positive integer, and K1 is an integer not greater than K0.

In a possible implementation, that information about a map element meets the first preset condition may include the following:

when the information about the map element is location information, if a distance between a location indicated by the location information of the map element included in the data and a location indicated by location information of finally determined map element is less than a preset distance threshold, it may be considered that the data meets the first preset condition; and

when the information about the map element is the location information of the obstacle, if the information about the map element included in the data is the same as information about the finally determined map element, it may be considered that the data meets the first preset condition.

In a possible implementation, the historical map element identification accuracy rate of the first data collection device may be further used to indicate one or more of the following:

a detection success rate of the first data collection device within a preset time period (for example, a higher detection success rate indicates a higher historical map element identification accuracy rate);

a quantity of times that the first data collection device makes effective contributions to cloud fusion within a preset time period (for example, a larger quantity of times that the first data collection device makes effective contributions to the cloud fusion indicates a higher historical map element identification accuracy rate);

a star level of reliability of the first data collection device within a preset time period, for example, there is a maximum of 5 stars, and a star level of the first data collection device is 3 (for example, a higher star level of the reliability indicates a higher historical map element identification accuracy rate);

a quantity of times that a detection fault occurs in the first data collection device within a preset time period (for example, a smaller quantity of times that a detection fault occurs indicates a higher historical map element identification accuracy rate);

a detection error of the first data collection device within a preset time period (for example, a smaller detection error indicates a higher historical map element identification accuracy rate); and

a star level of detection result precision of the first data collection device within a preset time period (for example, a higher star level of detection result precision indicates a higher historical map element identification accuracy rate).

Parameter item a2-2: a proportion of data with map element information being correctly identified within a preset time period in data that is of the first data type and that is reported by the first data collection device.

In this embodiment of this application, the proportion of data with map element information being correctly identified may also be understood as: a map element information identification accuracy rate.

For example, in a preset time period, the first data collection device reports information about K0 map elements, the information about the K0 map elements includes information about K2 map elements, and the information about the K2 map elements is carried by the first data collection device by reporting the data of the first data type. In addition, in the information about the K2 map elements, information about K3 map elements meets the first preset condition. In this case, a ratio of K3 to K2 is a historical map element identification accuracy rate of the data that is of the first data type and that is reported by the first data collection device. The ratio of K3 to K2 may be used as the historical map element identification accuracy rate of the first data collection device. K2 is an integer not greater than K0, and K3 is an integer not greater than K2. In this way, an information identification accuracy rate of a map element of a data collection device may be maintained based on a granularity of a data type.

In a possible implementation, the historical map element identification accuracy rate of the first data collection device may be further used to indicate one or more of the following:

a detection success rate of the first data collection device on data of the first data type within a preset time period;

a quantity of times that the first data collection device makes effective contributions to the cloud fusion on data of the first data type in a preset time period;

a star level of reliability of the first data collection device on the data of the first data type within a preset time period, for example, there is a maximum of 5 stars, and the star level of the first data collection device is 3;

a quantity of times that a detection fault for the data of the first data type occurs in the first data collection device within a preset time period;

a detection error of the first data collection device on the data of the first data type within a preset time period; and

a star level of detection result precision of the first data collection device on the data of the first data type within a preset time period.

Parameter item a2-3: a proportion of data with map element information being correctly identified within a preset time period in data that is reported by the first data collection device and that includes a map element of a same type as the map element.

In this embodiment of this application, the proportion of data with map element information being correctly identified may also be understood as: a map element information identification accuracy rate.

This embodiment of this application relates to type information of the map element. The map element may be classified, and each type of map element may have a type identifier. The type information mentioned in this specification may be the type identifier. A classification rule is not limited. For example, signs may be classified into one type, or ground identifiers may be classified into one type.

For example, the first data collection device reports information about K0 map elements within a preset time period, the information about the K0 map elements includes information about K4 map elements, and a type of each map element in the information about the K4 map elements is the same as the type of the map element mentioned in step 227, for example, may all be content identification of a sign. For ease of reference, the type of the map element mentioned in step 227 is referred to as a first type. In this way, a type of each map element in the information about the K4 map elements is the first type. Further, the information about the K4 map elements includes information about K5 map elements, and each piece of the information about the K5 map elements meets the first preset condition. In this case, a ratio of K5 to K4 is a map element information identification accuracy rate of the data that is reported by the first data collection device and that includes a map element of a same type as the map element. The ratio of K5 to K4 may be used as the map element information identification accuracy rate of the first data collection device. K4 is an integer not greater than K0, and K5 is an integer not greater than K4. In this way, an information identification accuracy rate of a map element of a data collection device may be maintained based on a granularity of a map element.

In a possible implementation, the map element identification accuracy rate of the first data collection device may be further used to indicate one or more of the following:

a detection success rate of the first data collection device on a first-type map element within a preset time period;

a quantity of times that the first data collection device makes effective contributions to the cloud fusion on a first-type map element within a preset time period;

a star level of reliability of the first data collection device on a first-type map element within a preset time period, for example, there is a maximum of 5 stars, and a star level of the first data collection device is 3;

a quantity of times that a detection fault for a first-type map element occurs in the first data collection device within a preset time period;

a detection error of the first data collection device on a first-type map element within a preset time period; and

a star level of detection result precision of the first data collection device on a first-type map element within a preset time period.

In another possible implementation, the parameter item a2-1, the parameter item a2-2, and the parameter item a2-3 may be combined. For example, the first data collection device reports information about K0 map elements within a preset time period, the information about the K0 map elements includes information about K4 map elements, and a type of each map element in the information about the K4 map elements is the same as the type of the map element mentioned in step 227, for example, may all be content identification of a sign. The information about the K4 map elements includes the information about the K5 map elements, and each piece of the information about the K5 map elements meets the first preset condition. In addition, K6 map elements in the K5 map elements are carried by the first data collection device by reporting the data of the first data type. In this case, a ratio of K6 to K4 may be used as the historical map element identification accuracy rate of the first data collection device. K6 is an integer not greater than K5. In this way, an information identification accuracy rate of a map element of a data collection device may be maintained based on a granularity of a map element and a granularity of a data type.

It should be noted that information about a plurality of map elements in the information about the K0 map elements may be sent to the map update apparatus through one time of data reporting, or may be sent to the map update apparatus in a plurality of data reporting processes. In other words, when the data collection device reports data once, a quantity of map elements included in the data is not limited, which may be one or more.

The foregoing content describes the historical map element identification accuracy rate by using the parameter item a2. In a possible implementation, after step 203, the server in this embodiment of this application may further send the object information to all data collection devices, so that the data collection devices maintain historical map element identification accuracy rates thereof respectively. Alternatively, the server may calculate or update the historical map element identification accuracy rate of the data collection device based on the object information, and then send the historical map element identification accuracy rate to the data collection device.

In a possible implementation, the map update apparatus sends the object information to the first data collection device, where the object information is used to enable the first data collection device to determine a historical map element identification accuracy rate of the first data collection device with reference to the third information. In another possible implementation, the map update apparatus sends the object information to the second data collection device, where the object information is used to enable the second data collection device to determine a historical map element identification accuracy rate of the second data collection device with reference to the fourth information. In still another possible implementation, the map update apparatus determines the historical map element identification accuracy rate of the first data collection device based on the object information and the third information; and sends the historical map element identification accuracy rate of the first data collection device to the first data collection device. In yet another possible implementation, the map update apparatus determines the historical map element identification accuracy rate of the second data collection device based on the object information and the fourth information; and sends the historical map element identification accuracy rate of the second data collection device to the second data collection device.

Similarly, the reliability of the second data is related to one or more of the historical map element identification accuracy rate of the second data collection device and the confidence of the second data. The confidence of the second data is related to at least one of a parameter of a sensing apparatus that collects the second data, or a relative location relationship between the sensing apparatus that collects the second data and the map element. The reliability of the third data is related to at least one of the following: a historical map element identification accuracy rate of the third data collection device or confidence of the third data. The reliability of the fourth data is related to at least one of the following: a historical map element identification accuracy rate of the fourth data collection device or confidence of the fourth data. The confidence of the third data is related to at least one of a parameter of a sensing apparatus that collects the third data, or a relative location relationship between the sensing apparatus that collects the third data and the map element. The confidence of the fourth data is related to at least one of a parameter of a sensing apparatus that collects the fourth data, or a relative location relationship between the sensing apparatus that collects the fourth data and the map element. For a related description, refer to the foregoing description of the reliability of the first data. Details are not described herein again.

It can be learned from the foregoing content that, in this embodiment of this application, for received data of a same type, the map update apparatus may perform more accurate information fusion and residual data removal on the data with reference to a map element identification accuracy rate of the data collection device and/or confidence of the data. Therefore, on the one hand, accuracy of fused data can be improved, and map update accuracy can be improved; on the other hand, processing complexity can be reduced by removing redundant interference data. It should be understood that there may be a plurality of different implementation algorithms for performing fusion and data removal based on reliability of data. This is not specifically limited herein.

Further, when fusion is performed on data of a same data type (which may also be referred to as vertical fusion), fused data may also have a corresponding reliability. A reliability calculation method may include a Bayesian estimation method, a fuzzy mathematics method, a K-means method, a random vector machine method, another classic neural network calculation method, and the like. This is not specifically limited herein.

For example, the reliability of the fused data may be obtained based on reliability of data for fusion. For example, an operation of averaging reliability of all pieces of data may be performed, and an obtained value is used as the reliability of the fused data. For example, reliability $W_{V11}$ of a map element i in data $D_{V11}$ and reliability $W_{V12}$ of the map element i in data $D_{V12}$ are averaged, and an obtained value is used as reliability corresponding to the data of the first type. In still yet another possible implementation, weighted addition may be performed on $W_{V11}$ and $W_{V12}$, and an obtained value is used as the reliability corresponding to the data of the first type.

In this embodiment of this application, vertical fusion may be performed on a data collection device side, or may be performed on a cloud server. When the vertical fusion is performed on the data collection device side, the data collection device may perform vertical fusion on a plurality of pieces of data of a same data type that are obtained by the data collection device. When vertical fusion is performed on the cloud server, in this embodiment of this application, vertical fusion may also be performed on data that is of a same data type and that is reported by a plurality of vehicles.

In addition, in this embodiment of this application, when data of a same type is fused, data from sensors of a same type may be fused, or data from sensors of different types may be fused. When data from different sensors is fused, advantages of a plurality of sensors may be considered. For example, object level data of a camera and object level data of a millimeter-wave radar are fused:

obtaining location information of a first object point and location information of a second object point, where the first object point represents an object detected by a millimeter-wave radar sensor, and the second object point represents an object detected by the camera. When it is determined that a distance between the first object point and the second object point is less than a first preset threshold (a size of the first preset threshold may be set based on a size of the object, for example, set to 1/5 to 1/2 of the size of the object), it is considered that the first object point and the second object point are a same object. Further, a combination of a distance and a speed that are of the object and that are detected by the millimeter-wave radar, and a category and a horizontal location that are of the object and that are detected by the camera may be used as object level data information of the object. In this manner, object level data of the camera and object level data of the millimeter-wave radar are fused, so that not only an object resolution capability and an angle resolution capability of the camera can be utilized, but also a ranging capability and a speed measurement capability of the millimeter-wave radar can be utilized.

For horizontal fusion in step 203, in a possible implementation, when at least two pieces of information in N pieces of information is inconsistent, horizontal fusion may be performed based on parameter information of each data type in N data types. For example, when there are the first information and the second information in the N pieces of information, the object information may be determined based on at least one of first parameter information or second parameter information, the first information, and the second information. The first parameter information is used to indicate reliability of data in the data of the first data type, and the second parameter information is used to indicate reliability of data in the data of the second data type. In a possible implementation, information about a map element corresponding to a data type with a highest reliability may be used as the object information. In another possible implementation, information about a map element that accounts for a largest proportion in the N pieces of information may be used as the object information. There are a plurality of possible implementations, which are not listed herein one by one.

In still another possible implementation, a third weight is determined based on at least one of the first parameter information or the second parameter information, where the third weight is used to indicate a degree of impact of the first information on the object information. A fourth weight is determined based on at least one of the first parameter information or the second parameter information, where the fourth weight is used to indicate a degree of impact of the second information on the object information. The object information is determined based on the third weight, the fourth weight, the first information, and the second information.

Parameter information of a data type may include at least one of the following: a preset priority level of the data type, an amount of information that matches information about a map element corresponding to the data type and that is in information about a map element used to determine the object information, a data volume of the data type, confidence of the data of the data type, or a historical map element identification accuracy rate of a data collection device corresponding to the data of the data type.

For clearer description, the first data type is used as an example for description. The following information b1, information b2, information b3, and information b4 are used to describe parameter information (first parameter information) of the first data type.

Information b1: a preset priority level of the first data type.

In a possible implementation, a priority may be set for a data type. For example, considering that the feature level data may be obtained by filtering the raw data, and some key information may be filtered out, while the object level data may be obtained by filtering out more information, a possible sorting manner of priorities of data types is as follows: a priority of the raw data is the highest, a priority of the feature level data is the second highest, and a priority of the object level data is the lowest. A higher priority of the data type indicates a higher weight of information about a map element corresponding to data of the data type.

In a possible implementation, if the map element is content (for example, an identifier for a maximum speed limit) on a sign plate, and data of a plurality of data types are corresponding to different pieces of information about the map element, information about the map element in the raw data may be selected as the object information.

Information b2: a data volume of the data of the first data type.

In a possible implementation, the map update apparatus may receive data that is of the first data type and that is from a plurality of data collection devices, and may further fuse a plurality of pieces of data that is of the first data type to obtain fused data, and further obtain the first information of the map element from the fused data of the first data type. The information b2 is a sample data volume of the obtained fused data of the first data type. In a possible implementation, a larger sample data volume indicates that the fused data of the first data type is more accurate, the first information of the map element is more accurate, and a weight of the first information of the map element may be higher.

For example, $D_{V11}$ and $D_{V12}$ are data of the first data type in the information b2. It can be learned that a data volume of the data of the first data type in this example is 2. Similarly, for another example, the data volume of the data of the second data type may be 3.

Information b3: reliability of the data of the first data type.

The reliability of the data of the first data type may be reliability corresponding to the first information. The reliability of the data of the first data type may be obtained based on reliability $W_{V11}$ and reliability $W_{V12}$. The reliability $W_{V11}$ may include confidence of $D_{V11}$ and/or a historical map element identification accuracy rate of the vehicle $V_{11}$. Reliability $W_{V12}$ may include confidence of $D_{V12}$ and/or a historical map element identification accuracy rate of the vehicle $V_{12}$. The reliability $W_{V11}$ is reliability of the map element i in the data $D_{V11}$, and the reliability $W_{V12}$ is reliability of the map element i in the data $D_{V12}$. The data $D_{V11}$ is data that is reported by the vehicle $V_{11}$ and that includes the map element i. The data $D_{V12}$ is data that is reported by the vehicle $V_{12}$ and that includes the map element i.

Information b4: a quantity of pieces of information that match the first information and that are in the N pieces of information.

When the information about the map element is the location information of the map element, if there is one piece of information in the N pieces of information, for example, the second information, and when a distance between a location indicated by the second information and a location indicated by the first information is within a preset distance threshold, it can be considered that the first information matches the second information. The location indicated by the second information may be the same as or different from the location indicated by the first information.

When the information about the map element is the content of the sign, it is considered that the first information matches the second information when the first information is the same as the second information. When the first information is different from the second information, it is considered that the first information does not match the second information.

The foregoing content is described by using the first data type as an example. Similarly, the parameter information of the second data type may include at least one of the following: a preset priority level of the second data type, a data volume of the data of the second data type, reliability of the data of the second data type, or a quantity of pieces of information that match the second information and that are in the N pieces of information. For description of related content, refer to the foregoing information b1 to information b4. Details are not described herein again.

In another possible implementation, content included in the first parameter information may be sequentially determined based on priorities of the following parameter items: a parameter item with a highest priority is the preset priority level of the first data type; a parameter item with a second highest priority is a quantity of pieces of information that match the first information and that are in the information about the map element used to determine the object information; and a parameter item with a third highest priority is a data volume in the data of the first data type. In still another possible implementation, content included in the second parameter information is sequentially determined based on priorities of the following parameter items: a parameter item with a highest priority is a preset priority level of the second data type; a parameter item with a second highest priority is a quantity of pieces of information that match the second information and that are in the information about the map element used to determine the object information; and a parameter item with a third highest priority is a data volume in the data of the second data type.

For example, when the N pieces of information in step 203 include the first information, the second information, and the fifth information, the first information is information obtained based on the object level data, the second information is information obtained based on the feature level data, and the fifth information is information obtained based on the raw data. In a possible implementation, the object information of the map element may be determined based on a preset priority level of a data type. For example, if a priority of the raw data is set to the highest, and a priority of the feature level data is the same as a priority of the object level data, the fifth information may be determined as the object information. In another possible implementation, if the N pieces of information do not include the information obtained based on the raw data, for example, include only the information obtained based on the feature level data and the information obtained based on the object level data, the object information may be determined based on a quantity of pieces of information that are in the N pieces of information and that have consistent results, that is, information that is in the N pieces of information and that has a largest quantity of consistent results is used as the object information. In the N pieces of information, if there are M1 pieces of information 1 that have consistent results, and there are M1 pieces of information 2 that have consistent results, while a quantity of other pieces of information that have consistent results is less than M1. In this case, whether the information 1 or the information 2 should be selected. In a possible implementation, information with a largest quantity of sample points in the N pieces of information may be used as the object information. In another possible implementation, a quantity of all sample points corresponding to the information 1 may be determined, a quantity of all sample points corresponding to the information 2 may be determined, and then information with a large quantity of sample points is used as the object information.

In still another possible implementation, a third weight of the first information may be determined based on one of the information b1 to the information b4. In yet another possible implementation, the third weight of the first information may be determined based on a plurality of pieces of the information b1 to the information b4. For example, a weight may be allocated to each piece of the information b1 to the information b4, and the information b1 to the information b4 are scored respectively to obtain a score corresponding to each piece of the information b 1 to the information b4, and then weighted addition is performed on the four scores to obtain a total score of the first information.

Similarly, a total score of each of the N pieces of information may also be obtained, and then a weight corresponding to each of the N pieces of information is determined based on a proportional relationship among total scores of the N pieces of information. For example, when the N pieces of information include only the first information and the second information, a proportional relationship between a total score of the first information and a total score of the second information may be used as a ratio of the third weight to the fourth weight.

In a possible implementation, in this embodiment of this application, a weight corresponding to data of a data type may be set based on a specific situation. Specifically, the weight may be set based on the information about map element.

For example, when the information about the map element is location information, a value of a weight corresponding to one of the N pieces of information mentioned in the foregoing content may be 0 or 1, or may be a value other than 0 and 1. For example, the first information includes first location information of the map element, for example, may include coordinate values of the map element in an earth coordinate system. The second information includes second location information of the map element. In this case, the third weight and the fourth weight may be set to 0 and 1 respectively. In this way, the second information may be selected from the first information and the second information as the object information. In another possible implementation, the third weight and the fourth weight may also be set to other parameters, for example, 20% and 80%. In this case, weighted addition may be performed on coordinate values in the first information and the second information, and an average value is obtained, to obtain the object information.

For another example, when the information about the map element is the content of the sign, a value of a weight corresponding to one of the N pieces of information mentioned in the foregoing content may only be 0 or 1, and cannot be a value other than 0 and 1. For example, the map element is the identifier for a maximum speed limit, and the first information includes first identification content of the map element (an identified identifier for a maximum speed limit displayed in the first identification content is 80 km/h (km/h)). The second information includes second identification content of the map element (an identified identifier for a maximum speed limit displayed in the second identification content is 60 km/h). In this case, the values of the third weight and the fourth weight can only be set to 0 and 1. For example, if the third weight is 0, and the fourth weight is 1, it indicates that the second information (60 km/h) is selected as the object information. That is, only one of the first information and second information can be selected as the object information. When the N pieces of information include more than two pieces of information, and when the map element is the identifier for a maximum speed limit, and the N pieces of information include a specific value of the identifier for a maximum speed limit, the map update apparatus needs to select one of a plurality of specific values as the object information.

In this embodiment of this application, information about a plurality of map elements may be obtained based on data of a plurality of data types, or it may be understood as horizontal mutual verification is performed on the information about the plurality of map elements. For example, when the map update apparatus has raw data, feature level data, and object level data of a same map element, a cloud may calibrate the feature data and the object level data based on the raw data. Optionally, when results of the three types of data are inconsistent or conflict, the map update apparatus may correct, based on a detection data result with a higher reliability (for example, may be higher confidence), a result of detection data of another data type with a low reliability. For example, when the map element is location information, for example, the first information, the second information, and the third information all include the location information of the map element, information that is in the first information, the second information, and the third information and that is inconsistent with content of the object information may be corrected based on location information in finally determined object information. Further, information about the map element that is collected by the data collection device and that is inconsistent with the object information may be corrected based on the object information. For example, a correction coefficient may be determined, to correct location information of the map element subsequently collected by the data collection device.

After step 203, in a possible implementation, the map update apparatus disposed on the cloud may indicate, based on the object information and data collected by the data collection device, a reporting policy of the data collection device disposed on the vehicle end.

For example, the map update apparatus may generate a first message based on at least one of the object information or data collected by the first data collection device, and send the first message to the first data collection device, where the first message is used to indicate at least one of a data reporting period of the first data collection device or map element type information reported by the first data collection device. For another example, the map update apparatus may generate a second message based on at least one of the object information or data collected by the second data collection device, and send the second message to the second data collection device, where the second message is used to indicate at least one of a data reporting period of the second data collection device or map element type information reported by the second data collection device.

In actual application, the map update apparatus may instruct the data collection device to report some information. For example, the map update apparatus may instruct the data collection device to report identification information of the data collection device (when the data collection device is a vehicle, the identification information may be a vehicle license plate number, an identification number, vehicle type information, or the like). In a possible implementation, the map update apparatus may determine, based on a maintained historical map element identification accuracy rate of a data collection device, a data reporting policy of the data collection device.

For example, the data reporting period of the data collection device may be indicated based on the maintained historical map element identification accuracy rate of the data collection device. For example, when the historical map element identification accuracy rate of the data collection device is high, the data reporting period of the data collection device may be enabled to be short. When the historical map element identification accuracy rate of the data collection device is low, the data reporting period of the data collection device may be enabled to be long, or the data collection device may be enabled to not report data anymore.

For another example, type information of the map element reported by the data collection device may be indicated based on the maintained historical map element identification accuracy rate of the data collection device. For example, if the data collection device has one or more high identification accuracy rates for one or more types of map elements, the data collection device may be instructed to report only information about these types of map elements, or reporting periods of information about these types of map elements are shortened.

For still another example, the historical map element identification accuracy rate may be used to indicate, based on different statistics such as a data collection environment (for example, daytime or night, sunny day or rainy day, snowy day or not, suburb or city, high-speed road or urban road, rough road or flat road, congested or not), and based on a historical map element identification accuracy rate in subdivided data collection environment classification, a data reporting policy related to a data collection environment of the data collection device to the data collection device. In this way, a data accuracy advantage of each data collection device in a specific data collection environment is comprehensively utilized, and finally, accuracy of fused map information obtained from a plurality of data collection devices is improved.

In the embodiments of this application, "at least one" means one or more, and "a plurality of" means two or more than two. "and/or" describes an association relationship between associated objects, and represents that three relationships may exist. For example, A and/or B may represent the following cases: only A exists, both A and B exist, and only B exists, where A and B may be singular or plural. A character "/" generally indicates an "or" relationship between the associated objects. "At least one of the following items (pieces)" or a similar expression thereof refers to any combination of these items, including any combination of singular or plural items (pieces). For example, at least one of a, b, or c may indicate: a, b, c, a-b, a-c, b-c, or a-b-c, where a, b, and c may exist alone or in parallel.

In addition, unless otherwise specified, ordinal numbers such as "first" and "second" mentioned in the embodiments of this application are used to distinguish between a plurality of objects, but are not used to limit a sequence, a time sequence, priorities, or importance of the plurality of objects. For example, the first data type and the second data type are merely used to distinguish between different data types, but do not indicate different priorities, importance levels, or the like of the two data types.

It should be noted that, names of the foregoing messages are merely examples. With evolution of communications technologies, the name of any foregoing message may change. However, regardless of how the names of the messages change, provided that meanings of the messages are the same as those of the messages in this application, the messages fall within the protection scope of this application.

The foregoing mainly describes the solutions provided in this application from a perspective of interaction among network elements. It may be understood that, to implement the foregoing functions, each network element includes a corresponding hardware structure and/or software module for executing each function. A person of ordinary skill in the art should easily be aware that, in combination with the examples described in the embodiments disclosed in this specification, units and algorithm steps may be implemented by hardware or a combination of hardware and computer software in the present application. Whether a function is performed by hardware or hardware driven by computer software depends on particular applications and design constraints of the technical solution. A person skilled in the art may use different methods to implement the described functions for each particular application, but it should not be considered that such implementation goes beyond the scope of the present application.

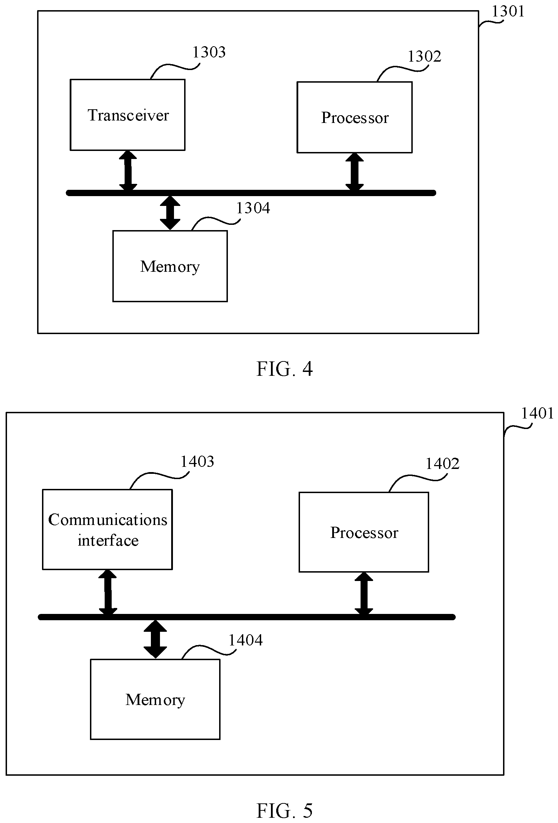

According to the foregoing method, FIG. 4 is a schematic diagram of a structure of a map update apparatus that can perform a map update method shown in FIG. 2 according to an embodiment of this application. As shown in FIG. 4, the map update apparatus may be a map update apparatus on a server side, may be a chip or a circuit, for example, a chip or a circuit that may be disposed in the map update apparatus on the server side.

Further, the map update apparatus 1301 may further include a bus system. A processor 1302, a memory 1304, and a transceiver 1303 may be connected through the bus system.

It should be understood that the processor 1302 may be a chip. For example, the processor 1302 may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

In an implementation process, steps in the foregoing methods can be implemented through an integrated logical circuit of hardware in the processor 1302, or by using instructions in a form of software. The steps of the methods disclosed with reference to the embodiments of this application may be directly performed and completed by a hardware processor, or may be performed and completed by using a combination of hardware and software modules in the processor 1302. The software module may be located in a mature storage medium in the art, such as a random access memory, a flash memory, a read-only memory, a programmable read-only memory, an electrically erasable programmable memory, or a register. The storage medium is located in the memory 1304, and the processor 1302 reads information in the memory 1304 and completes the steps of the foregoing methods in combination with hardware of the processor 1302.

It should be noted that, the processor 1302 in this embodiment of this application may be an integrated circuit chip, and has a signal processing capability. In an implementation process, the steps in the foregoing method embodiments can be implemented by a hardware integrated logical circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in the embodiments of this application. The general-purpose processor may be a microprocessor, or the processor may be any conventional processor or the like. Steps of the methods disclosed with reference to the embodiments of this application may be directly executed and accomplished by using a hardware decoding processor, or may be executed and accomplished by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory 1304 in this embodiment of this application may be a volatile memory or a nonvolatile memory, or may include both the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and methods described in this specification includes but is not limited to these memories and any memory of another proper type.

The map update apparatus may include a processor 1302, a transceiver 1303, and a memory 1304. The memory 1304 is configured to store instructions, and the processor 1302 is configured to execute the instructions stored in the memory 1304, to implement a related solution of the map update apparatus in any one or more of the corresponding methods shown in FIG. 1 to FIG. 3.

In a possible implementation, the transceiver 1303 is configured to receive data of a first data type and data of a second data type from a plurality of data collection devices. The processor 1302 is configured to obtain first information of a map element from the data of the first data type; obtain second information of the map element from the data of the second data type; and determine object information of the map element on a map based on the first information and the second information, where the object information includes at least one of location information, content information, or attribute information of the map element. The first data type and the second data type are two data types of raw data, feature level data, or object level data; the raw data is data collected by a sensor; the feature level data is data that is extracted from the raw data collected by the sensor and that can represent a feature of a detected object; and the object level data is data that is extracted from the raw data or the feature level data and that can represent an attribute of the detected object.

It can be learned that, in this embodiment of this application, because the object information may be determined by comprehensively considering data of a plurality of data types, accuracy of the object information can be improved. For example, because the feature level data is obtained by filtering the raw data, some key information may be filtered out. If the object information of the map elements is determined by combining the raw data and the feature level data, the accuracy of the object information of the map element can be further improved. For another example, because the object level data is obtained by filtering much information from the raw data, compared with the raw data and the feature level data, some key information may be filtered out. Therefore, the object level data and the feature level data, or the object level data and the raw data are considered together to determine the object information of the map element, to further improve the accuracy of the object information of the map element.

In a possible implementation, the plurality of data collection devices include a first data collection device and a second data collection device. The processor 1302 is specifically configured to: obtain third information of the map element from first data obtained by the first data collection device, where the first data is the data of the first data type; obtain fourth information of the map element from second data obtained by the second data collection device, where the second data is the data of the first data type; and obtain the first information of the map element based on the third information and the fourth information.

In a possible implementation, the processor 1302 is specifically configured to determine the first information based on at least one of reliability of the first data or reliability of the second data, and the third information and the fourth information.

In a possible implementation, the processor 1302 is specifically configured to: determine a first weight based on the at least one of the reliability of the first data or the reliability of the second data, where the first weight is used to represent a degree of impact of the third information on the first information; determine a second weight based on the at least one of the reliability of the first data or the reliability of the second data, where the second weight is used to represent a degree of impact of the fourth information on the first information; and determine the first information based on the first weight, the second weight, the third information, and the fourth information.

In a possible implementation, the reliability of the first data is related to at least one of the following: a historical map element identification accuracy rate of the first data collection device; or confidence of the first data. In this way, when considering the historical map element identification accuracy rate of the first data collection device, hardware accuracy of the first data collection device may be considered, that is, the reliability of the first data may be deduced based on historical performance. Therefore, accuracy of the reliability can be further improved. In addition, when reliability of data is determined by using confidence of the data, the accuracy of the reliability can be further improved.

In a possible implementation, the reliability of the second data is related to at least one of the following: a historical map element identification accuracy rate of the second data collection device; or confidence of the second data. In this way, the reliability of the first data can be further improved. In this way, when considering the historical map element identification accuracy rate of the second data collection device, hardware accuracy of the second data collection device may be considered, that is, the reliability of the second data may be deduced based on historical performance. Therefore, accuracy of the reliability can be further improved. In addition, when reliability of data is determined by using confidence of the data, the accuracy of the reliability can be further improved.

In a possible implementation, the confidence of the first data is related to at least one of the parameter of the sensing apparatus that collects the first data, or a relative location relationship between the sensing apparatus that collects the first data and the map element. In this way, the confidence of the first data can reflect reliability of the first data more accurately.

In a possible implementation, the confidence of the second data is related to at least one of the parameter of the sensing apparatus that collects the second data, or a relative location relationship between the sensing apparatus that collects the second data and the map element. In this way, the confidence of the second data can reflect reliability of the second data more accurately.

In a possible implementation, the processor 1302 is specifically configured to determine the object information based on at least one of first parameter information or second parameter information, and the first information and the second information, where the first parameter information is used to represent reliability of the data of the first data type, and the second parameter information is used to represent reliability of the data of the second data type.

In a possible implementation, the processor 1302 is specifically configured to: determine a third weight based on at least one of the first parameter information or the second parameter information, where the third weight is used to represent a degree of impact of the first information on the object information; determine a fourth weight based on at least one of the first parameter information or the second parameter information, where the fourth weight is used to represent a degree of impact of the second information on the object information; and determine the object information based on the third weight, the fourth weight, the first information, and the second information.

In a possible implementation, the processor 1302 is specifically configured to determine, based on the first parameter information and the second parameter information, information with a higher reliability in the first information and the second information as the object information.

In a possible implementation, the processor 1302 is further configured to send, by using the transceiver 1303, the object information to the first data collection device, where the object information is used to enable the first data collection device to determine a historical map element identification accuracy rate of the first data collection device with reference to the third information.

In a possible implementation, the processor 1302 is further configured to send, by using the transceiver 1303, the object information to the second data collection device, where the object information is used to enable the second data collection device to determine a historical map element identification accuracy rate of the second data collection device with reference to the fourth information.

In a possible implementation, the processor 1302 is further configured to: determine the historical map element identification accuracy rate of the first data collection device based on the object information and the third information; and send, by using the transceiver 1303, the historical map element identification accuracy rate of the first data collection device to the first data collection device.

In a possible implementation, the processor 1302 is further configured to: determine the historical map element identification accuracy rate of the second data collection device based on the object information and the fourth information; and send, by using the transceiver 1303, the historical map element identification accuracy rate of the second data collection device to the second data collection device.

In a possible implementation, the processor 1302 is further configured to update, based on data received from the plurality of data collection devices and the object information, a historical map element identification accuracy rate of at least one data collection device in the plurality of data collection devices, where the at least one data collection device is a device that provides the data of the first data type.

In a possible implementation, the transceiver 1303 is further configured to indicate a data reporting policy to the at least one data collection device, where the data reporting policy is determined based on the historical map element identification accuracy rate.

In a possible implementation, the transceiver 1303 is specifically configured to indicate, to the at least one data collection device, a reporting period of data of the specific data type based on the historical map element identification accuracy rate for the specific data type of the at least one data collection device.

In a possible implementation, the transceiver 1303 is specifically configured to indicate, to the at least one data collection device, a reporting period of data of a map element of the specific map element type based on the historical map element identification accuracy rate for the specific map element type of the at least one data collection device.

In a possible implementation, the transceiver 1303 is specifically configured to indicate, to the at least one data collection device, a reporting period of data in the specific data collection environment based on the historical map element identification accuracy rate for the specific data collection environment of the at least one data collection device.

For other related descriptions, reference may be made to the content of the foregoing method embodiments, and details are not described herein again. For concepts, explanations, detailed descriptions, and other steps of the map update apparatus that are related to the technical solutions provided in the embodiments of this application, refer to descriptions of the content in the foregoing methods or other embodiments. Details are not described herein again.

Based on the foregoing method, FIG. 5 is a schematic diagram of a structure of a map update apparatus according to an embodiment of this application. As shown in FIG. 5, the map update apparatus 1401 may include a communications interface 1403, a processor 1402, and a memory 1404. The communications interface 1403 is configured to input and/or output information. The processor 1402 is configured to execute a computer program or an instruction, so that the map update apparatus 1401 implements the method on a map update apparatus side in the related solutions of FIG. 1 to FIG. 3. In this embodiment of this application, the communications interface 1403 may implement the solution implemented by the transceiver 1303 in FIG. 4, the processor 1402 may implement the solution implemented by the processor 1302 in FIG. 4, and the memory 1404 may implement the solution implemented by the memory 1304 in FIG. 4. Details are not described herein again.

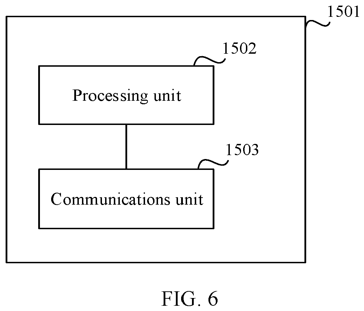

Based on the foregoing embodiment and a same concept, FIG. 6 is a schematic diagram of a map update apparatus that can implement the map update method shown in FIG. 2 according to an embodiment of this application. As shown in FIG. 6, the map update apparatus 1501 may be a map update apparatus on a server side, or may be a chip or a circuit, for example, a chip or a circuit that may be disposed in the map update apparatus on the server side.

A communications unit 1503 is configured to receive the data of the first data type and the data of the second data type from the plurality of data collection devices. A processing unit 1502 is configured to: obtain the first information of the map element from the data of the first data type; obtain the second information of the map element from the data of the second data type; and determine the object information of the map element on the map based on the first information and the second information, where the object information includes at least one of the location information or a road identifier.

In a possible implementation, the first data type and the second data type are two data types of the raw data, the feature level data, or the object level data; the raw data is data collected by the sensor; the feature level data is data that is extracted from the raw data collected by the sensor and that can represent a feature of a detected object; and the object level data is data that is extracted from the raw data or the feature level data and that can represent an attribute of the detected object.

It can be learned that, in this embodiment of this application, because the object information may be determined by comprehensively considering data of a plurality of data types, accuracy of the object information can be improved. For example, because the feature level data is obtained by filtering the raw data, some key information may be filtered out. If the object information of the map elements is determined by combining the raw data and the feature level data, the accuracy of the object information of the map element can be further improved. For another example, because the object level data is obtained by filtering much information from the raw data, compared with the raw data and the feature level data, some key information may be filtered out. Therefore, the object level data and the feature level data, or the object level data and the raw data are considered together to determine the object information of the map element, to further improve the accuracy of the object information of the map element.

When the map update apparatus 1501 is corresponding to the map update apparatus on the server side in the foregoing method, the communications unit 1503 is configured to receive a first message. The processing unit 1502 is configured to parse the first message to obtain the first data, and update the map based on the first data. The first data is obtained based on data collected by at least one sensor of the vehicle, and the first message includes the first data. The first message includes at least one of first indication information, second indication information, and third indication information.

For concepts, explanations, detailed descriptions, and other steps of the map update apparatus that are related to the technical solutions provided in the embodiments of this application, refer to descriptions of the content in the foregoing methods or other embodiments. Details are not described herein again.

It may be understood that for a function of each unit in the map update apparatus 1501, refer to implementation of a corresponding method embodiment. Details are not described herein again.

It should be understood that unit division of the map update apparatus is merely logical function division. During actual implementation, all or some of the units may be integrated into a physical entity, or may be physically separated. In this embodiment of this application, the communications unit 1503 may be implemented by the transceiver 1303 in FIG. 4, and the processing unit 1502 may be implemented by the processor 1302 in FIG. 4.

According to the method provided in the embodiments of this application, this application further provides a computer program product. The computer program product includes computer program code or instructions. When the computer program code or the instructions is/are run on a computer, the computer is enabled to perform the method according to any one of the embodiments shown in FIG. 1 to FIG. 3.

According to the method provided in the embodiments of this application, this application further provides a computer-readable storage medium. The computer-readable storage medium stores program code, and when the program code is run on a computer, the computer is enabled to perform the method according to any one of the embodiments shown in FIG. 1 to FIG. 3.

According to the method provided in the embodiments of this application, this application further provides a chip system. The chip system may include a processor. The processor is coupled to a memory, and may be configured to execute the method in any one of the embodiments shown in FIG. 1 to FIG. 3. Optionally, the chip system further includes a memory. The memory is configured to store a computer program (which may also be referred to as code or an instruction). The processor is configured to invoke a computer program from the memory and run the computer program, so that a device on which a chip system is installed performs the method in any one of the embodiments shown in FIG. 1 to FIG. 3.

According to the method provided in the embodiments of this application, this application further provides a system, including the foregoing one or more vehicles and a map update apparatus on a server side. The foregoing data collection device is disposed in the vehicle.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, procedures or functions according to the embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be accessed by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state drive (solid state drive, SSD)), or the like.

It should be noted that a part of this patent application document includes copyright-protected content. The copyright owner reserves the copyright except copies are made for the patent documents or the recorded content of the patent documents in the Patent Office.

The map update apparatus in the foregoing apparatus embodiments corresponds to the map update apparatus in the method embodiments. A corresponding module or unit performs a corresponding step. For example, a communications unit (a transceiver) performs a receiving step or a sending step in the method embodiments, and a processing unit (a processor) may perform steps other than the sending step and the receiving step. For a function of a specific unit, refer to a corresponding method embodiment. There may be one or more processors.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, unit division is merely logical function division and may be other division in actual implementation. For example, a plurality of units or components may be combined or integrated into another system, or some features may be ignored or not performed. In addition, the displayed or discussed mutual couplings or direct couplings or communications connections may be implemented by using some interfaces. The indirect couplings or communications connections between the apparatuses or units may be implemented in electronic, mechanical, or other forms.

Units described as separate parts may or may not be physically separate. Parts displayed as units may or may not be physical units, to be specific, may be located in one position, or may be distributed on a plurality of network units. Some or all of the units may be selected based on actual requirements to achieve the objectives of the solutions of the embodiments.

In addition, function units in the embodiments of this application may be integrated into one unit, each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A map update method, comprising:

   receiving data of a first data type and data of a second data type from a plurality of data collection devices;
   obtaining first information of a map element from the data of the first data type;
   obtaining second information of the map element from the data of the second data type; and
   determining object information of the map element on a map based on the first information and the second information, wherein the object information comprises at least one of location information, content information, or attribute information of the map element;
   the first data type and the second data type are two data types of raw data, feature level data, or object level data;
   the raw data is data collected by a sensor;
   the feature level data is data that is extracted from the raw data collected by the sensor and that can represent a feature of a detected object; and
   the object level data is data that is extracted from the raw data or the feature level data and that can represent an attribute of the detected object.

2. The method according to claim 1, wherein the plurality of data collection devices comprise a first data collection device and a second data collection device, and the obtaining first information of a map element from the data of the first data type comprises:

   obtaining third information of the map element from first data obtained by the first data collection device, wherein the first data is the data of the first data type;
   obtaining fourth information of the map element from second data obtained by the second data collection device, wherein the second data is the data of the first data type; and
   obtaining the first information of the map element based on the third information and the fourth information.

3. The method according to claim 2, wherein the obtaining the first information of the map element based on the third information and the fourth information comprises:
   determining the first information based on at least one of reliability of the first data or reliability of the second data, and the third information and the fourth information.

4. The method according to claim 3, wherein the determining the first information based on at least one of reliability of the first data or reliability of the second data, and the third information and the fourth information comprises:

determining a first weight based on the at least one of the reliability of the first data or the reliability of the second data, wherein the first weight is used to represent a degree of impact of the third information on the first information; determining a second weight based on the at least one of the reliability of the first data or the reliability of the second data, wherein the second weight is used to represent a degree of impact of the fourth information on the first information; and determining the first information based on the first weight, the second weight, the third information, and the fourth information.

5. The method according to claim 3 or 4, wherein the reliability of the first data is related to at least one of the following:

a historical map element identification accuracy rate of the first data collection device; or confidence of the first data, wherein the reliability of the second data is related to at least one of the following:

a historical map element identification accuracy rate of the second data collection device; or confidence of the second data.

6. The method according to any one of claims 1 to 5, wherein the determining object information of the map element on a map based on the first information and the second information of the map element comprises:

determining the object information based on at least one of first parameter information or second parameter information, and the first information and the second information, wherein the first parameter information is used to represent reliability of the data of the first data type, and the second parameter information is used to represent reliability of the data of the second data type.

7. The method according to claim 6, wherein the determining the object information based on at least one of first parameter information or second parameter information, and the first information and the second information comprises:

determining a third weight based on at least one of the first parameter information or the second parameter information, wherein the third weight is used to represent a degree of impact of the first information on the object information; determining a fourth weight based on at least one of the first parameter information or the second parameter information, wherein the fourth weight is used to represent a degree of impact of the second information on the object information; and determining the object information based on the third weight, the fourth weight, the first information, and the second information.

8. The method according to claim 6, wherein the determining the object information based on at least one of first parameter information or second parameter information, and the first information and the second information comprises:
determining, based on the first parameter information and the second parameter information, information with a higher reliability in the first information and the second information as the object information.

9. The method according to claim 7 or 8, wherein the first parameter information comprises at least one of the following:

a preset priority level of the first data type; a data volume of the data of the first data type; confidence of the data of the first data type; or a historical map element identification accuracy rate of a data collection device corresponding to the data of the first data type, wherein the second parameter information comprises at least one of the following:

a preset priority level of the second data type; a data volume of the data of the second data type;

confidence of the data of the second data type; or

a historical map element identification accuracy rate of a data collection device corresponding to the data of the second data type.

10. The method according to any one of claims 1 to 9, wherein the method further comprises:

updating, based on data received from the plurality of data collection devices and the object information, a historical map element identification accuracy rate of at least one data collection device in the plurality of data collection devices, wherein the at least one data collection device is a device that provides the data of the first data type or the data of the second data type; and

indicating a data reporting policy to the at least one data collection device, wherein the data reporting policy is determined based on the historical map element identification accuracy rate.

11. The method according to claim 10, wherein the historical map element identification accuracy rate of the at least one data collection device comprises at least one of the following:

a detection success rate of the at least one data collection device within a preset time period;

a quantity of times that the at least one data collection device makes effective contributions to cloud fusion within a preset time period;

a star level of reliability of the at least one data collection device within a preset time period;

a quantity of times that a detection fault occurs in the at least one data collection device within a preset time period;

a detection error of the at least one data collection device within a preset time period; or

a star level of detection result precision of the at least one data collection device within a preset time period.

12. The method according to claim 10 or 11, wherein the historical map element identification accuracy rate of the at least one data collection device is:

a historical map element identification accuracy rate for a specific data type;

a historical map element identification accuracy rate for a specific map element type; or

a historical map element identification accuracy rate for a specific data collection environment.

13. The method according to any one of claims 10 to 12, wherein the indicating a data reporting policy to the at least one data collection device comprises at least one of the following:

indicating, to the at least one data collection device, a reporting period of data of the specific data type based on the historical map element identification accuracy rate for the specific data type of the at least one data collection device;

indicating, to the at least one data collection device, a reporting period of data of a map element of the specific map element type based on the historical map element identification accuracy rate for the specific map element type of the at least one data collection device; or

indicating, to the at least one data collection device, a reporting period of data in the specific data collection environment based on the historical map element identification accuracy rate for the specific data collection environment of the at least one data collection device.

14. A map update apparatus, comprising:

a communications unit, configured to receive data of a first data type and data of a second data type from a plurality of data collection devices; and

a processing unit, configured to obtain first information of a map element from the data of the first data type; obtain second information of the map element from the data of the second data type; and determine object information of the map element on a map based on the first information and the second information, wherein the object information comprises at least one of location information, content information, or attribute information of the map element;

the first data type and the second data type are two data types of raw data, feature level data, or object level data;

the raw data is data collected by a sensor;

the feature level data is data that is extracted from the raw data collected by the sensor and that can represent a feature of a detected object; and

the object level data is data that is extracted from the raw data or the feature level data and that can represent an attribute of the detected object.

15. The map update apparatus according to claim 14, wherein the processing unit is specifically configured to:

obtain third information of the map element from first data obtained by the first data collection device, wherein the first data is the data of the first data type;
obtain fourth information of the map element from second data obtained by the second data collection device, wherein the second data is the data of the first data type; and
obtain the first information of the map element based on the third information and the fourth information.

16. The map update apparatus according to claim 15, wherein the processing unit is specifically configured to:
determine the first information based on at least one of reliability of the first data or reliability of the second data, and the third information and the fourth information.

17. The map update apparatus according to claim 16, wherein the processing unit is specifically configured to:

determine a first weight based on the at least one of the reliability of the first data or the reliability of the second data, wherein the first weight is used to represent a degree of impact of the third information on the first information;
determine a second weight based on the at least one of the reliability of the first data or the reliability of the second data, wherein the second weight is used to represent a degree of impact of the fourth information on the first information; and
determine the first information based on the first weight, the second weight, the third information, and the fourth information.

18. The map update apparatus according to claim 16 or 17, wherein the reliability of the first data is related to at least one of the following:

a historical map element identification accuracy rate of the first data collection device; or
confidence of the first data, wherein
the reliability of the second data is related to at least one of the following:

a historical map element identification accuracy rate of the second data collection device; or
confidence of the second data.

19. The map update apparatus according to any one of claims 14 to 18, wherein the processing unit is specifically configured to:

determine the object information based on at least one of first parameter information or second parameter information, and the first information and the second information, wherein
the first parameter information is used to represent reliability of the data of the first data type, and the second parameter information is used to represent reliability of the data of the second data type.

20. The map update apparatus according to claim 19, wherein the processing unit is specifically configured to:

determine a third weight based on at least one of the first parameter information or the second parameter information, wherein the third weight is used to represent a degree of impact of the first information on the object information;
determine a fourth weight based on at least one of the first parameter information or the second parameter information, wherein the fourth weight is used to represent a degree of impact of the second information on the object information; and
determine the object information based on the third weight, the fourth weight, the first information, and the second information.

21. The map update apparatus according to claim 20, wherein the processing unit is specifically configured to:
determine, based on the first parameter information and the second parameter information, information with a higher reliability in the first information and the second information as the object information.

22. The map update apparatus according to claim 20 or 21, wherein the first parameter information comprises at least one of the following:

a preset priority level of the first data type;
a quantity of information that is in the first information and the second information and that matches the first information;
a data volume of the data of the first data type;
confidence of the data of the first data type; or
a historical map element identification accuracy rate of a data collection device corresponding to the data of the first data type, wherein
the second parameter information comprises at least one of the following:

a preset priority level of the second data type;
a quantity of information that is in the first information and the second information and that matches the second information;
a data volume of the data of the second data type;
confidence of the data of the second data type; or
a historical map element identification accuracy rate of a data collection device corresponding to the data of the second data type.

23. The map update apparatus according to any one of claims 14 to 22, wherein the processing unit is further configured to:

update, based on data received from the plurality of data collection devices and the object information, a historical map element identification accuracy rate of at least one data collection device in the plurality of data collection devices, wherein the at least one data collection device is a device that provides the data of the first data type or the data of the second data type; or
the communications unit is further configured to:
indicate a data reporting policy to the at least one data collection device, wherein the data reporting policy is determined based on the historical map element identification accuracy rate.

24. The map update apparatus according to claim 23, wherein the historical map element identification accuracy rate of the at least one data collection device comprises at least one of the following:

a detection success rate of the at least one data collection device within a preset time period;
a quantity of times that the at least one data collection device makes effective contributions to cloud fusion within a preset time period;
a star level of reliability of the at least one data collection device within a preset time period;
a quantity of times that a detection fault occurs in the at least one data collection device within a preset time period;
a detection error of the at least one data collection device within a preset time period; and
a star level of detection result precision of the at least one data collection device within a preset time period.

25. The map update apparatus according to claim 23 or 24, wherein the historical map element identification accuracy rate of the at least one data collection device is at least one of the following:

a historical map element identification accuracy rate for a specific data type;
a historical map element identification accuracy rate for a specific map element type; or
a historical map element identification accuracy rate for a specific data collection environment.

26. The map update apparatus according to any one of claims 23 to 25, wherein the communications unit is specifically configured to:

indicate, to the at least one data collection device, a reporting period of data of the specific data type based on the historical map element identification accuracy rate for the specific data type of the at least one data collection device;
indicate, to the at least one data collection device, a reporting period of data of a map element of the specific map element type based on the historical map element identification accuracy rate for the specific map element type of the at least one data collection device; or
indicate, to the at least one data collection device, a reporting period of data in the specific data collection environment based on the historical map element identification accuracy rate for the specific data collection environment of the at least one data collection device.

27. A map update apparatus, comprising a processor and a memory, wherein the memory is configured to store a computer executable instruction, and the processor executes the computer executable instruction in the memory, so that the map update apparatus performs the method according to any one of claims 1 to 13.

28. A map update apparatus, comprising a processor and a communications interface, wherein

   the communications interface is configured to input and/or output information; and
   the processor is configured to execute a computer program, to perform the method according to any one of claims 1 to 13.

29. A computer-readable storage medium, wherein the computer-readable storage medium stores a computer executable program, and when the computer executable program is executed by a processor, the map update apparatus is enabled to perform the method according to any one of claims 1 to 13.

30. A computer program product, wherein when the computer program product is run on a processor, the map update apparatus is enabled to perform the method according to any one of claims 1 to 13.

FIG. 1

FIG. 2

Horizontal fusion

Horizontal fusion is performed based on the location information 1, the location information 2, and the location information 3 of the obstacle, and obtained location information of the obstacle is determined as the object information of the obstacle

Object information

Vertical fusion

Information about the obstacle in the object level data is fused to obtain location information 1 (first information) of the obstacle

First data
(an obstacle is a traffic road cone, and location information of the traffic road cone)
(object level data)

Vehicle $V_{11}$

Second data
(an obstacle is a traffic road cone, and location information of the traffic road cone)
(object level data)

Vehicle $V_{12}$

Vertical fusion

Information about the obstacle in the feature level data is fused to obtain location information 2 (second information) of the obstacle

Third data
(key point information of a shape and contour of the obstacle)
(feature level data)

Vehicle $V_{21}$

Fourth data
(key point information of a shape and contour of the obstacle)
(feature level data)

Vehicle $V_{22}$

Vertical fusion

Information about the obstacle in the raw data is fused to obtain location information 3 (fifth information) of the obstacle

Fifth data
(laser radar point cloud data of the obstacle)
(raw data)

Vehicle $V_{31}$

Sixth data
(laser radar point cloud data of the obstacle)
(raw data)

Vehicle $V_{32}$

FIG. 3

FIG. 4

FIG. 5

FIG. 6

## INTERNATIONAL SEARCH REPORT

| International application No. |
|---|
| **PCT/CN2021/132759** |

### A. CLASSIFICATION OF SUBJECT MATTER

G06F 16/23(2019.01)i

According to International Patent Classification (IPC) or to both national classification and IPC

### B. FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

WPI, EPODOC, CNPAT, CNKI: 地图, 更新, 元素, 数据, 特征, 属性, 位置, 原始, 初始, 类型, 可信度, 置信度, 采集, 权重, map, updat+, feature, locat+, data, object, characteristic, reliability, weight

### C. DOCUMENTS CONSIDERED TO BE RELEVANT

| Category* | Citation of document, with indication, where appropriate, of the relevant passages | Relevant to claim No. |
|---|---|---|
| X | CN 111427985 A (BEIJING PONY.AI SCIENCE AND TECHNOLOGY CO., LTD.) 17 July 2020 (2020-07-17) description, paragraphs [0031]-[0081] | 1-2, 10-15, 23-30 |
| Y | CN 111427985 A (BEIJING PONY.AI SCIENCE AND TECHNOLOGY CO., LTD.) 17 July 2020 (2020-07-17) description, paragraphs [0031]-[0081] | 3-9, 16-22 |
| Y | CN 104391869 A (BAIDU ONLINE NETWORK TECHNOLOGY (BEIJING) CO., LTD.) 04 March 2015 (2015-03-04) description, paragraphs [0039]-[0085] | 3-9, 16-22 |
| A | CN 106228160 A (ZHEJIANG UNIVIEW TECHNOLOGIES CO., LTD.) 14 December 2016 (2016-12-14) entire document | 1-30 |
| A | CN 108834064 A (PINXIN TECHNOLOGY CO., LTD.) 16 November 2018 (2018-11-16) entire document | 1-30 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 January 2022** | **23 February 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/132759**

| Patent document cited in search report | | | Publication date (day/month/year) | Patent family member(s) | Publication date (day/month/year) |
|---|---|---|---|---|---|
| CN | 111427985 | A | 17 July 2020 | None | |
| CN | 104391869 | A | 04 March 2015 | None | |
| CN | 106228160 | A | 14 December 2016 | None | |
| CN | 108834064 | A | 16 November 2018 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110097462X